# EUROPÄISCHE PATENTSCHRIFT

(11) **EP 3 898 160 B1**
(45) Veröffentlichungstag und Bekanntmachung des Hinweises auf die Patenterteilung: **02.11.2022**
(21) Anmeldenummer: 19835584.4
(22) Anmeldetag: 06.12.2019
(51) Int. Cl.: B29B 17/00, B29B 17/04, B29C 48/00

(54) **AUFBEREITUNGSANLAGE SOWIE VERFAHREN ZUR AUFBEREITUNG VON KUNSTSTOFFMATERIAL FÜR DESSEN WIEDERVERWERTUNG**
PREPARATION PLANT AND METHOD FOR PROCESSING PLASTIC MATERIAL FOR ITS RECYCLING
USINE DE PRÉPARATION ET PROCÉDÉ DE TRAITEMENT DE MATIÈRE PLASTIQUE POUR SON RECYCLAGE

(30) Priorität: 19.12.2018 AT 511312018
(43) Veröffentlichungstag der Anmeldung: 27.10.2021
(73) Patentinhaber: Next Generation Recyclingmaschinen GmbH, 4101 Feldkirchen an der Donau (AT)
(72) Erfinder: KROISS, Günter, 4081 Hartkirchen (AT)
(74) Vertreter: Burger, Hannes
(86) Internationale Anmeldenummer: PCT/AT2019/060417
(87) Internationale Veröffentlichungsnummer: WO 2020/124110

(56) Entgegenhaltungen:
- EP-A1- 3 302 910
- EP-B1- 3 302 910
- WO-A1-2013/052989
- GB-A- 1 159 963
- GB-A- 2 269 149
- JP-A- 2005 324 522
- US-A- 6 126 100

## Beschreibung

Die Erfindung betrifft ein Verfahren zur Aufbereitung von Kunststoffmaterial sowie eine Aufbereitungsanlage für Kunststoffmaterial , insbesondere zur Aufbereitung von thermoplastischem Kunststoffmaterial für dessen Wiederverwertung.

Aus der WO 98/16360 A sowie der daraus hervorgegangenen EP 0 934 144 B1 sind jeweils eine gattungsgemäß ausgebildete Aufbereitungsvorrichtung zum Zerkleinern, Fördern und anschließendem Plastifizieren von thermoplastischem Kunststoffmaterial bekannt geworden. Diese Aufbereitungsvorrichtung umfasst eine Zufuhrvorrichtung, eine Aufbereitungseinheit und eine daran anschließende Plastifiziervorrichtung. Die Aufbereitungseinheit umfasst ihrerseits eine Zerkleinerungsvorrichtung, eine schneckenförmig ausgebildete Fördervorrichtung, ein rohrförmig ausgebildetes Gehäuse sowie zumindest ein Antriebsmittel für die Zerkleinerungsvorrichtung und die Fördervorrichtung. Die Zerkleinerungsvorrichtung und die daran anschließende schneckenförmige Fördervorrichtung sind in dem rohrförmig ausgebildeten Gehäuse aufgenommen sowie drehbar gelagert. Weiters definiert die Fördervorrichtung einen ersten Förderabschnitt mit einer ersten Längsachse. Das rohrförmige Gehäuse weist im Bereich der Zerkleinerungsvorrichtung zumindest eine hin zur Zufuhrvorrichtung geöffnete Zufuhröffnung und in einem Endbereich des ersten Förderabschnitts der Fördervorrichtung eine bodenseitig angeordnete Austrittsöffnung auf. Die Plastifiziervorrichtung umfasst ihrerseits eine in einem Extrudergehäuse aufgenommene Extruderschnecke sowie ein weiteres Antriebsmittel dafür. Die Extruderschnecke weist einen weiteren Förderabschnitt auf und definiert im weiteren Förderabschnitt eine weitere Längsachse. Im Extrudergehäuse ist eine Einfüllöffnung angeordnet, wobei die Einfüllöffnung und die im rohrförmigen Gehäuse angeordnete Austrittsöffnung unmittelbar aneinander anschließend angeordnet sind. Im Übergabeabschnitt zwischen der Fördervorrichtung und der Extruderschnecke wird das zerkleinerte Kunststoffmaterial entweder direkt vom Schneckensteg der schneckenförmigen Fördervorrichtung oder von umlaufenden Messern des austragsorgantragenden Teils durch die Austrittsöffnung in die Einfüllöffnung und damit in die darunter befindliche Extruderschnecke hineingefördert. Die erste Längsachse der Fördervorrichtung und die weitere Längsachse der Extruderschnecke sind im Bereich der Austrittsöffnung und der Einfüllöffnung bezüglich einer Projektion auf eine Horizontalebene zueinander kreuzend unter einem Winkel von 90° angeordnet. Die Umlaufrichtung der Aufbereitungseinheit ist an der Austrittsöffnung übereinstimmend mit der Förderrichtung der Extruderschnecke gewählt.

Eine ähnliche, gattungsgemäß ausgebildete Aufbereitungsvorrichtung ist aus der EP 1 918 084 B1 bekannt geworden, welche auf die geometrische Ausbildung des Übergabebereichs zwischen der Fördervorrichtung und der Extruderschnecke gerichtet ist. Auch hier sind wiederum die erste Längsachse der Fördervorrichtung und die weitere Längsachse der Extruderschnecke im Übergangsbereich zwischen der Austrittsöffnung und der Einfüllöffnung bezüglich einer Projektion auf eine Horizontalebene zueinander kreuzend unter einem Winkel von 90° oder unter einem davon abweichenden Winkel zueinander angeordnet. Die Übergabe des zerkleinerten Kunststoffmaterials von der Fördervorrichtung hin zur Extruderschnecke kann dabei analog erfolgen, wie dies zuvor bei der WO 98/16360 A bzw. der daraus hervorgegangenen EP 0 934 144 B1 beschrieben worden ist.

Diese beiden bekannten Aufbereitungsvorrichtungen haben sich im Praxisbetrieb recht gut bewährt, wobei jedoch nicht in allen Betriebsfällen eine gleichmäßige Übergabe des zerkleinerten Kunststoffmaterials an die Plastifiziervorrichtung erreicht werden konnte. In Einzelfällen konnten sich im Übergabebereich des zerkleinerten Kunststoffmaterials zwischen der Austrittsöffnung aus dem Bereich der Fördervorrichtung und der Einfüllöffnung in die Plastifiziervorrichtung Kunststoffstückchen ansammeln, was zu einer Verkleinerung der Öffnungen bis hin zu einem Verstopfen derselben führen konnte. Weiters konnte die von der Plastifiziervorrichtung pro Zeiteinheit abgegebene und aufgeschmolzene Kunststoffmenge nur durch die Erhöhung der Drehzahl des Antriebs der Plastifiziervorrichtung erhöht werden. Die Möglichkeit zur Drehzahlerhöhung war aber durch Materialdegradation infolge zu hoher Scherung und die Motorleistung begrenzt.

Die DE 35 25 554 A1 beschreibt eine andere Ausbildung einer Aufbereitungsvorrichtung von thermoplastischem Kunststoff. Die Vorrichtung weist einen stehenden Aufnahmebehälter auf, wobei in seinem Bodenbereich ein um die Behälterachse drehbar angeordnetes Zerkleinerungs- und Mischwerkzeug vorgesehen ist. Seitlich und unterhalb des Aufnahmebehälters ist ein quer zur Behälterachse verlaufender Schneckenextruder angeordnet. Weiters ist eine in paralleler Richtung bezüglich der Behälterachse ausgerichtete Förderschnecke vorgesehen, welche in einer taschenartigen Erweiterung der Umfangswand des Aufnahmebehälters seitlich des Zerkleinerungs- und Mischwerkzeugs angeordnet ist. Die Förderschnecke ist in Richtung auf den Schneckenextruder frei auskragend angeordnet und endet mit ihrem freien Schneckenende an einer im Gehäuse des Schneckenextruders ausgebildeten Einfüllöffnung. Das zerkleinerte Kunststoffmaterial wird von der vertikal ausgerichteten Förderschnecke in die Einfüllöffnung gefördert und gelangt nach dem Durchtritt durch die Einfüllöffnung zur Extruderschnecke des Schneckenextruders. Die US 6 126 100 A offenbart ebenso ein Verfahren und eine Vorrichtung zur Aufbereitung von Kunststoffmaterial.

Der vorliegenden Erfindung liegt die Aufgabe zugrunde, die Übergabe des zerkleinerten Kunststoffmaterials von der Fördervorrichtung hin zur Extrusionsvorrichtung gleichmäßiger und noch konstanter zu gestalten, um so ein Ansammeln von Kunststoffmaterial im Übergabebereich und ein damit verbundenes Verstopfen des Übergabebereichs zu minimieren oder überhaupt zu verhindern. Weiters soll aber auch noch die Ausstoßleistung der aus der Extrusionsvorrichtung abgegebenen Kunststoffmenge je Zeiteinheit bei gleichbleibender Antriebsleistung der Extrusionsvorrichtung erhöht werden.

Diese Aufgabe wird durch ein Verfahren zur Aufbereitung von Kunststoffmaterial sowie eine Aufbereitungsanlage für Kunststoffmaterial gemäß den Ansprüchen gelöst.

Das Verfahren dient zur Aufbereitung von Kunststoffmaterial, insbesondere von thermoplastischem Kunststoffmaterial für dessen Wiederverwertung, mittels einer Aufbereitungsanlage umfassend folgende Schritte:
- Bereitstellen einer Zufuhrvorrichtung, wobei das aufzubereitende Kunststoffmaterial bei der Zufuhrvorrichtung aufgegeben wird,
- Bereitstellen einer Aufbereitungseinheit mit
   - einem hohlzylinderförmig ausgebildeten Gehäuse,
   - einem Wellenkörper mit einer am Wellenkörper angeordneten oder ausgebildeten Zerkleinerungsvorrichtung und einer in Förderrichtung an die Zerkleinerungsvorrichtung anschließenden Fördervorrichtung umfassend zumindest einen ersten Schneckensteg,
   - wobei der Wellenkörper eine erste Längsachse definiert,
   - wobei der erste Schneckensteg den Wellenkörper in radialer Richtung um einen ersten Überstand überragt und vom ersten Überstand eine erste Kreisringfläche mit einer äußeren ersten Umhüllenden definiert ist, wobei eine Ringbreite der ersten Kreisringfläche dem ersten Überstand entspricht,
   - wobei von der Fördervorrichtung in Axialrichtung des Wellenkörpers ein erster Förderabschnitt definiert wird,
   - wobei der Wellenkörper im Gehäuse aufgenommen sowie an seinem ersten Wellenende mittels einer ersten Lageranordnung und an seinem in Axialrichtung davon beabstandeten zweiten Wellenende mittels einer zweiten Lageranordnung am Gehäuse drehbar gelagert ist, und
   - wobei das Gehäuse im Bereich der Zerkleinerungsvorrichtung zumindest eine hin zur Zufuhrvorrichtung geöffnete Zufuhröffnung aufweist, und
   - dabei das aufzubereitende Kunststoffmaterial von der Zerkleinerungsvorrichtung zerkleinert und mittels des zumindest einen ersten Schneckenstegs der Fördervorrichtung entlang des ersten Förderabschnitts hin in Richtung auf das zweite Wellenende gefördert wird,
- Bereitstellen einer Extrusionsvorrichtung mit
   - einem Extrudergehäuse,
   - zumindest einer Extruderschnecke, umfassend einen Schnecken-Grundkörper und zumindest einen weiteren Schneckensteg,
   - wobei der zumindest eine weitere Schneckensteg der Extruderschnecke eine äußere weitere Umhüllende definiert,
   - wobei die Extruderschnecke im Extrudergehäuse aufgenommen ist und eine weitere Längsachse definiert, und
   - wobei die zumindest eine Extruderschnecke einen weiteren Förderabschnitt definiert und in Förderrichtung gesehen die Extrusionsvorrichtung der Aufbereitungseinheit nachgeordnet ist,
- Bereitstellen eines Übergabebereichs mit einer Austrittsöffnung aus dem Gehäuse und einer Einfüllöffnung in das Extrudergehäuse, wobei der Übergabebereich in einem Endabschnitt des ersten Förderabschnitts der Fördervorrichtung angeordnet ist und der erste Förderabschnitt im Übergabebereich mit dem zweiten Förderabschnitt in Strömungsverbindung steht,
- wobei bezüglich einer Projektion auf eine Horizontalebene die erste Längsachse und die weitere Längsachse im Übergabebereich einander kreuzend ausgerichtet sind, und
- wobei das von der Fördervorrichtung geförderte Kunststoffmaterial im Übergabereich an die Extrusionsvorrichtung und deren zumindest eine Extruderschnecke übergeben wird, und weiters
- das zerkleinerte Kunststoffmaterial während seiner Förderbewegung entlang des ersten Förderabschnitts hin zum Übergabebereich zumindest mittels der Fördervorrichtung auf eine Übergabetemperatur mit einem mittleren Temperaturwert erwärmt wird, wobei der mittlere Temperaturwert der Übergabetemperatur mindestens im Bereich der Erweichungstemperatur des Kunststoffmaterials liegt,
- der zumindest eine weitere Schneckensteg der Extruderschnecke, in axialer Projektionsrichtung in Richtung der ersten Längsachse des Wellenkörpers gesehen, derart angeordnet ist, dass der zumindest eine weitere Schneckensteg in Richtung auf die erste Längsachse in die vom ersten Schneckensteg mit seinem ersten Überstand definierte erste Kreisringfläche hineinragt, und
- das zerkleinerte Kunststoffmaterial im Übergabereich mit seiner Übergabetemperatur mittels des zumindest einen ersten Schneckenstegs direkt innerhalb die vom zumindest einen weiteren Schneckensteg der Extruderschnecke definierte weitere Umhüllende hineingefördert wird.

Der dadurch erzielte Vorteil liegt darin, dass durch die zusätzlich entlang des ersten Förderabschnitts von der Fördervorrichtung eingebrachte Wärmemenge oder Wärmeenergie das zuvor zerkleinerte Kunststoffmaterial soweit erwärmt wird, und dabei mindestens bis auf die Erweichungstemperatur des jeweiligen Kunststoffmaterials verbracht wird, sodass dieses zumindest teilweise in einen plastifizierten Zustand übergeht. Bei diesem gewählten Vorgehen wird die bereitgestellte Antriebsenergie der Aufbereitungseinheit nicht nur für den Zerkleinerungsvorgang und die Transportbewegung herangezogen, sondern dient auch noch dazu, das Kunststoffmaterial bis hin zum Übergabebereich auf eine bestimmte Übergabetemperatur zu erwärmen. Für den Zerkleinerungsvorgang wird eine hohe Nennleistung der Antriebseinheit bereitgestellt, jedoch diese nur in relativ kurzen Zeitabschnitten auch tatsächlich benötigt. In der restlichen Zeitdauer wird die nicht benötigte restliche Antriebsenergie der Antriebseinheit für den Erwärmungsvorgang des Kunststoffmaterials bis hin zum Übergabebereich genutzt. Durch die Vorwärmung oder Temperierung des Kunststoffmaterials zumindest entlang des ersten Förderabschnitts, kann mit einer geringeren Antriebsleistung der Extrusionsvorrichtung das Auslangen gefunden werden. Bei gleich hoher Antriebsleistung der Extrusionsvorrichtung kann jedoch pro Zeiteinheit eine höhere Durchsatzmenge an Kunststoffmaterial erzielt werden.

Aufgrund der direkten Übernahme des Kunststoffmaterials durch die Extruderschnecke kann dieses bereits in der Aufbereitungseinheit auf wesentlich höhere Temperaturen erwärmt werden, ohne den Übergabebereich zu verkleben. Das Kunststoffmaterial wird zumindest bis zu einer beginnenden Plastifizierung erwärmt und kann weiters auch noch vorverdichtet werden. Dadurch wird die nachfolgende Extruderschnecke energetisch entlastet. Das Kunststoffmaterial wird stärker kompaktiert und es ist weniger Energie zum weiteren Erwärmen der Schmelze in der Extrusionseinheit nötig. Damit werden bei gleichbleibendem Ausstoß mildere Scherbedingungen im Extruder erzielt.

Darüber hinaus erfolgt durch die höhere Temperatur des Kunststoffmaterials auch bereits vor dem Übergabebereich eine Trocknung von feuchtem Material. Die hohe Oberfläche in der Fördervorrichtung fördert weiters einen effizienten Wärmeaustausch und ermöglicht das Entweichen des Wassers in Richtung der Zufuhrvorrichtung oder in Richtung eventuell vorgesehener Öffnungen im Bereich der Fördervorrichtung. Damit wird weiters die im Extruder einzubringende Energie reduziert, noch dazu unter Ausnutzung der besseren geometrischen Verhältnisse in der Fördervorrichtung im Vergleich zur begrenzten Raumsituation in der Extruderschnecke.

Weiters wird durch das einander in Projektionsrichtung überschneidende Anordnen zumindest des weiteren Schneckenstegs der Extruderschnecke in die vom Überstand des ersten Schneckenstegs definierte erste Kreisringfläche eine noch nähere Zueinander-Anordnung der beiden einander kreuzenden Längsachsen der Aufbereitungseinheit, insbesondere der Fördervorrichtung, mit deren Wellenkörper, und der Extruderschnecke erzielt. Das vom ersten Schneckensteg der Fördervorrichtung antransportierte oder angeförderte Kunststoffmaterial wird im Querschnitt der Fördervorrichtung gesehen somit direkt in den Arbeitsbereich der Extruderschnecke mit deren weiterem Schneckensteg gefördert. So wird durch die bevorzugte Übereinander-Anordnung der einander kreuzenden Längsachsen und die winkelige Ausrichtung derselben zueinander, der vertikale Übergabeabschnitt im Übergabebereich verkürzt. Weiters wird damit ausgehend vom ersten Schneckensteg der Fördervorrichtung eine gerichtete Zwangsförderung des zerkleinerten Kunststoffmaterials direkt in die Extruderschnecke und den daran angeordneten weiteren oder zweiten Schneckensteg erzielt. Durch diese Überschneidung der von den Schneckenstegen gebildeten Förderbereiche kann somit auf zusätzliche Stopf- und/oder Schneidwerkzeuge im Übergabebereich am Ende der Fördervorrichtung verzichtet werden. Weiters wird damit auch das Ansammeln von Kunststoffmaterial im Übergabebereich von der Fördervorrichtung hin zur Extrusionsvorrichtung vermindert oder überhaupt verhindert.

Weiters ist ein Vorgehen vorteilhaft, bei dem der Temperaturwert der Übergabetemperatur des Kunststoffmaterials zumindest der Schmelztemperatur des Kunststoffmaterials entspricht.

Eine weitere vorteilhafte Vorgehensweise ist dadurch gekennzeichnet, dass der Temperaturwert der Übergabetemperatur des Kunststoffmaterials zumindest 100°C beträgt.

Vorteilhaft ist auch eine Verfahrensvariante, bei welcher mittels der Fördervorrichtung bis zu 20% der zum Erwärmen des Kunststoffmaterials von der Aufgabetemperatur auf eine Abgabetemperatur des Kunststoffmaterials aus der Extrusionsvorrichtung erforderlichen Wärmemenge in das Kunststoffmaterial eingebracht werden. Damit kann die Abgabemenge des aufgeschmolzenen Kunststoffmaterials je Zeiteinheit aus der Extrusionsvorrichtung bei gleichem Energiebedarf erhöht werden.

Eine andere Vorgehensweise zeichnet sich dadurch aus, wenn das Erwärmen des Kunststoffmaterials mittels der Rotationsbewegung der Fördervorrichtung und deren zumindest einen ersten Schneckensteg auf mechanischer Basis durchgeführt wird. So kann die rotative Drehbewegung der Fördervorrichtung auch zum Aufbringen der Wärmemenge oder Wärmeenergie herangezogen werden.

Weiters ist ein Vorgehen vorteilhaft, bei welchem dem Kunststoffmaterial während seiner Förderbewegung zumindest entlang des ersten Förderabschnitts eine zusätzliche Wärmemenge zugeführt und/oder eine Wärmemenge entzogen wird. So kann ein noch gezielterer Temperaturverlauf innerhalb des aufzubereitenden Kunststoffmaterials bis hin zum Übergabebereich erzielt werden. Damit kann im Falle zusätzlicher Energiezufuhr der Energiebedarf bei gleichbleibender Durchsatzmenge in der Extrusionsvorrichtung gesenkt oder bei gleichem Energieeintrag die Durchsatzmenge pro Zeiteinheit in der Extrusionsvorrichtung erhöht werden.

Die Aufgabe der Erfindung wird aber auch durch eine Aufbereitungsanlage für Kunststoffmaterial, insbesondere zur Aufbereitung von thermoplastischem Kunststoffmaterial für dessen Wiederverwertung, gelöst.

Die erfindungsgemäße Aufbereitungsanlage dient zur Aufbereitung, nämlich dem Zerkleinern, Fördern und dem nachfolgenden Aufschmelzen, von thermoplastischem Kunststoffmaterial für dessen Wiederverwertung. Die Aufbereitungsanlage umfasst dabei zumindest
- eine Zufuhrvorrichtung,
- eine Aufbereitungseinheit mit
   - einem hohlzylinderförmig ausgebildeten Gehäuse,
   - einem Wellenkörper, mit einer am Wellenkörper angeordneten oder ausgebildeten Zerkleinerungsvorrichtung und einer in Förderrichtung an die Zerkleinerungsvorrichtung anschließenden Fördervorrichtung umfassend zumindest einen ersten Schneckensteg,
   - wobei der Wellenkörper eine erste Längsachse definiert,
   - wobei der erste Schneckensteg den Wellenkörper in radialer Richtung um einen ersten Überstand überragt und vom ersten Überstand eine erste Kreisringfläche mit einer äußeren ersten Umhüllenden definiert ist, wobei eine Ringbreite der ersten Kreisringfläche dem ersten Überstand entspricht,
   - wobei die Fördervorrichtung in Axialrichtung des Wellenkörpers einen ersten Förderabschnitt definiert,
   - wobei der Wellenkörper im Gehäuse aufgenommen sowie an seinem ersten Wellenende mittels einer ersten Lageranordnung und an seinem in Axialrichtung davon beabstandeten zweiten Wellenende mittels einer zweiten Lageranordnung am Gehäuse drehbar gelagert ist, und
   - wobei das Gehäuse im Bereich der Zerkleinerungsvorrichtung zumindest eine hin zur Zufuhrvorrichtung geöffnete Zufuhröffnung aufweist,
- eine Extrusionsvorrichtung mit
   - einem Extrudergehäuse,
   - zumindest einer Extruderschnecke, umfassend einen Schnecken-Grundkörper und zumindest einen weiteren Schneckensteg,
   - wobei der zumindest eine weitere Schneckensteg der Extruderschnecke eine äußere weitere Umhüllende definiert,
   - wobei die Extruderschnecke im Extrudergehäuse aufgenommen ist und eine weitere Längsachse definiert, und
   - wobei die zumindest eine Extruderschnecke einen weiteren Förderabschnitt definiert und in Förderrichtung gesehen die Extrusionsvorrichtung der Aufbereitungseinheit nachgeordnet ist,
- einen Übergabebereich mit einer Austrittsöffnung aus dem Gehäuse und einer Einfüllöffnung in das Extrudergehäuse, wobei der Übergabebereich in einem Endabschnitt des ersten Förderabschnitts der Fördervorrichtung angeordnet ist und der erste Förderabschnitt im Übergabebereich mit dem zweiten Förderabschnitt in Strömungsverbindung steht, und
- wobei bezüglich einer Projektion auf eine Horizontalebene die erste Längsachse und die weitere Längsachse im Übergabebereich einander kreuzend ausgerichtet sind, und weiters
- zumindest der weitere Schneckensteg der Extruderschnecke, in axialer Projektionsrichtung in Richtung der ersten Längsachse des Wellenkörpers gesehen, in Richtung auf die erste Längsachse in die vom ersten Schneckensteg mit seinem ersten Überstand definierte erste Kreisringfläche hineinragt.

Der dadurch erzielte Vorteil liegt darin, dass durch das einander in Projektionsrichtung überschneidende Anordnen zumindest des weiteren Schneckenstegs der Extruderschnecke in die vom Überstand des ersten Schneckenstegs definierte erste Kreisringfläche eine noch nähere Zueinander-Anordnung der beiden einander kreuzenden Längsachsen der Aufbereitungseinheit, insbesondere der Fördervorrichtung, mit deren Wellenkörper, und der Extruderschnecke erzielt wird. Das vom ersten Schneckensteg der Fördervorrichtung antransportierte oder angeförderte Kunststoffmaterial wird im Querschnitt der Fördervorrichtung gesehen direkt in den Arbeitsbereich der Extruderschnecke mit deren weiterem Schneckensteg gefördert. So wird durch die bevorzugte Übereinander-Anordnung der einander kreuzenden Längsachsen und die winkelige Ausrichtung derselben zueinander, der vertikale Übergabeabschnitt im Übergabebereich verkürzt. Weiters wird damit ausgehend vom ersten Schneckensteg der Fördervorrichtung eine gerichtete Zwangsförderung des zerkleinerten Kunststoffmaterials direkt in die Extruderschnecke und den daran angeordneten weiteren oder zweiten Schneckensteg erzielt. Durch diese Überschneidung der Förderbereiche kann somit auf zusätzliche Stopf- und/oder Schneidwerkzeuge im Übergabebereich am Ende der Fördervorrichtung verzichtet werden. Weiters wird damit auch das Ansammeln von Kunststoffmaterial im Übergabebereich von der Fördervorrichtung hin zur Extrusionsvorrichtung vermindert oder überhaupt verhindert.

Weiters kann es vorteilhaft sein, wenn ein Teilabschnitt des Schnecken-Grundkörpers der Extruderschnecke in die vom ersten Überstand des ersten Schneckenstegs definierte erste Kreisringfläche hineinragt. Damit kann eine noch bessere Übernahme und ein gleichmäßigerer Füllgrad der Extruderschnecke mit dem zuvor zerkleinerten und angeförderten Kunststoffmaterial erzielt werden.

Eine andere Ausführungsform zeichnet sich dadurch aus, dass ein Trägerrohr vorgesehen ist, an welchem Trägerrohr der erste Schneckensteg angeordnet oder ausgebildet ist und das Trägerrohr am Wellenkörper angeordnet und mit dem Wellenkörper drehfest zu einer zusammengehörigen Baueinheit verbunden ist. Damit kann rasch auf unterschiedliche Einsatzbedingungen Bedacht genommen werden. Darüber hinaus kann so auch leichter ein Austausch von verschlissenen Bauteilen durchgeführt werden, ohne dass dabei der gesamte Wellenkörper auszutauschen ist.

Eine weitere mögliche Ausführungsform hat die Merkmale, dass die äußere weitere Umhüllende des weiteren Schneckenstegs der Extruderschnecke unmittelbar benachbart zum Wellenkörper der Aufbereitungseinheit angeordnet ist. Damit können die beiden Längsachsen der Fördervorrichtung und der Extrusionsvorrichtung auf den geringstmöglichen Abstand zueinander angeordnet werden. Durch das unmittelbare, benachbarte Anordnen des weiteren Schneckenstegs mit seiner weiteren von diesem definierten, äußeren Umhüllenden, können Kollisionen zwischen der Extruderschnecke und dem Wellenkörper der Aufbereitungseinheit vermieden werden.

Eine weitere Ausbildung sieht vor, dass der erste Schneckensteg in Richtung der ersten Längsachse gesehen vor der vom weiteren Schneckensteg definierten äußeren weiteren Umhüllenden endet. Damit wird erzielt, dass im Übergabebereich der erste Schneckensteg der Fördervorrichtung nicht mit dem äußeren Umfangsbereich der Extruderschnecke mit ihrem weiteren Schneckensteg kollidiert.

Eine andere Ausführungsform zeichnet sich dadurch aus, dass ein Leitelement vorgesehen ist, welches Leitelement in Axialrichtung auf der von der Zerkleinerungsvorrichtung abgewendeten Seite der Fördervorrichtung am Wellenkörper angeordnet ist und dessen Querschnitt im Axialschnitt gesehen in seinem der Extruderschnecke zugewendeten Abschnitt geringfügig kleiner ausgebildet ist als die vom weiteren Schneckensteg definierte äußere weitere Umhüllende. Durch das Anordnen des Leitelements auf der der Fördervorrichtung gegenüberliegenden Seite bezüglich der Extruderschnecke kann so eine noch gerichtetere Übernahme des angeförderten Kunststoffmaterials in den Aufnahmebereich der Extruderschnecke erzielt werden. Zusätzlich kann damit aber auch eine Abdichtung des Innenraums des Gehäuses hin zur zweiten Lageranordnung erzielt werden.

Eine weitere bevorzugte Ausführungsform ist dadurch gekennzeichnet, dass eine Vertiefung im Wellenkörper vorgesehen ist, welche Vertiefung über den Umfang des Wellenkörpers durchlaufend ausgebildet ist und deren Querschnitt im Axialschnitt gesehen in dem der Extruderschnecke zugewendeten Abschnitt geringfügig größer ausgebildet ist als die vom weiteren Schneckensteg definierte äußere weitere Umhüllende. Durch das Anordnen oder Ausbilden einer zusätzlichen Vertiefung im Wellenkörper können die beiden einander kreuzenden Längsachsen der Aufbereitungseinheit, insbesondere deren Wellenkörper, sowie der Extruderschnecke im Übergabebereich in einer noch besser einander überschneidenden Lage mit dem vom ersten Schneckensteg gebildeten Förderbereich angeordnet werden.

Vorteilhaft kann es sein, wenn eine Temperiervorrichtung vorgesehen ist, welche am und/oder im Gehäuse und/oder im Wellenkörper angeordnet oder ausgebildet ist, wobei mittels der Temperiervorrichtung dem Kunststoffmaterial zumindest entlang des ersten Förderabschnitts eine Wärmemenge zugeführt und/oder abgeführt werden kann. So kann ein noch gezielterer Temperaturverlauf innerhalb des aufzubereitenden Kunststoffmaterials bis hin zum Übergabebereich erzielt werden. Damit kann im Falle einer Energiezufuhr der Energiebedarf bei gleichbleibender Durchsatzmenge in der Extrusionsvorrichtung gesenkt oder bei gleichem Energieeintrag die Durchsatzmenge pro Zeiteinheit in der Extrusionsvorrichtung erhöht werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Teilausschnitt einer Aufbereitungsanlage in einem axialen Vertikalschnitt durch die Aufbereitungseinheit;
- Fig. 2: einen Radialschnitt durch die Fördervorrichtung der Aufbereitungseinheit im Übergabebereich zur Extrusionsvorrichtung, gemäß den Linien II-II in Fig. 1;
- Fig. 3: eine weitere mögliche Ausführung der Aufbereitungsanlage im Übergabebereich in einem axialen Vertikalschnitt durch die Aufbereitungseinheit sowie schaubildlicher Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

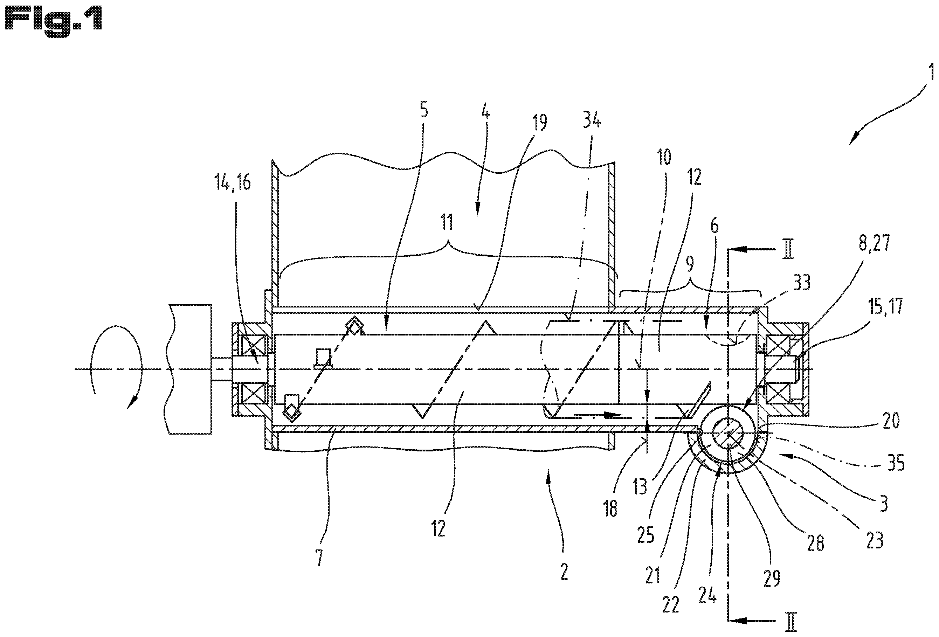

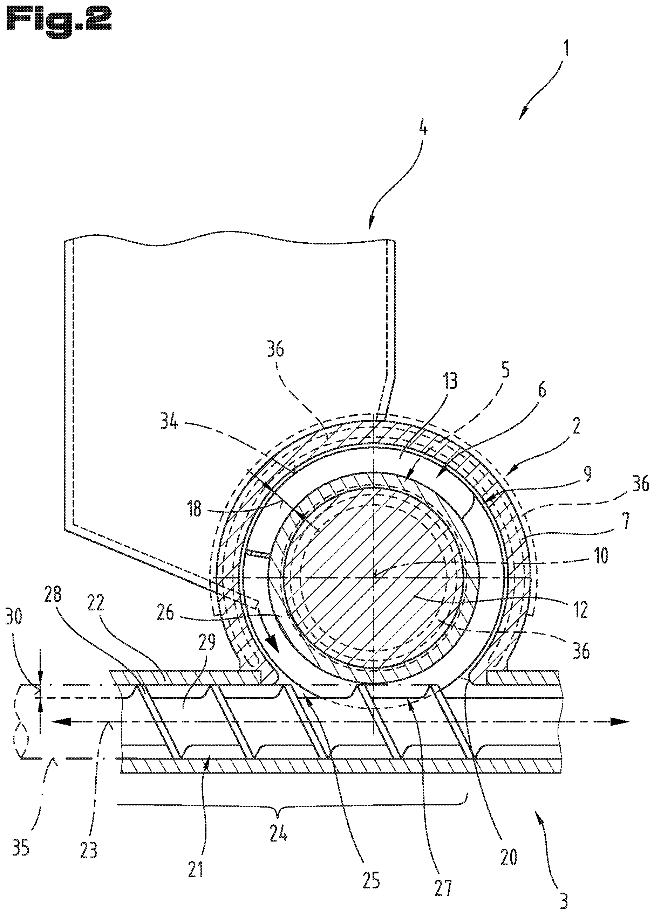

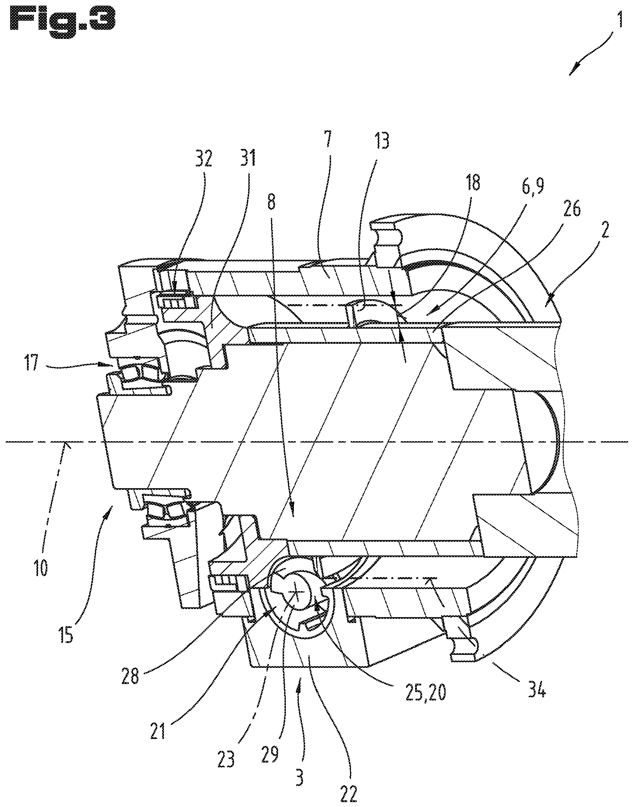

In den Fig. 1 und 2 ist eine Aufbereitungsanlage 1 für Kunststoffmaterial, insbesondere zur Aufbereitung von thermoplastischem Kunststoffmaterial für dessen Wiederverwertung vereinfacht und nur in Teilabschnitten dargestellt. Die Fig. 3 zeigt ebenfalls die Aufbereitungsanlage 1, jedoch mit möglichen zusätzlichen Ausführungsbeispielen. Die Aufbereitungsanlage 1 wird zumeist auf einer ebenen, bevorzugt horizontal ausgerichteten Aufstandsfläche, wie z.B. einem Hallenboden, aufgestellt.

Grundsätzlich dient eine derartige Aufbereitungsanlage 1 dazu, zuerst das zumeist eine größere Abmessung aufweisende oder großvolumige Kunststoffmaterial in einer Aufbereitungseinheit 2 auf eine entsprechend kleinere Stückgröße zu einem in seiner Größe weiter verarbeitbaren Stückgut zu zerkleinern und anschließend in einer Extrusionsvorrichtung 3 aufzuschmelzen. Das zu zerkleinernde Kunststoffmaterial kann durch größeres Stückgut in den unterschiedlichsten Abmessungen und Größen, Folien, Bändern oder aber auch bereits vorzerkleinertes Teilstückgut gebildet sein. Der von der Extrusionsvorrichtung 3 aufgeschmolzene und aus dieser austretende Schmelzestrom kann oder die austretenden Schmelzeströme können nach deren Formgebung abgekühlt und für die spätere Verarbeitung granuliert werden. Unabhängig davon oder zusätzlich dazu wäre es aber auch möglich, das aufgeschmolzene Kunststoffmaterial einer direkt daran anschließenden Weiterverarbeitung und/oder einer entsprechenden Formgebung zuzuführen. Die unmittelbar nachfolgende Formgebung kann in einem kontinuierlichen oder einem diskontinuierlichen Extrusionsprozess oder einem Spritzgussprozess erfolgen, wobei hier noch die in der Schmelze enthaltene Wärmemenge nicht zuerst abgeführt und später erneut zugeführt werden muss. Eine zusätzliche Aufbereitung, Reinigung oder der Zusatz von Zuschlagstoffen ist dabei auch noch möglich.

Der Aufbereitungseinheit 2 ist zumeist eine Zufuhrvorrichtung 4 vorgeordnet, welche in bekannter Weise dazu dient, das zu verarbeitende und/oder aufzubereitende Kunststoffmaterial zu sammeln und der Aufbereitungseinheit 2 zuzuleiten. Die Zufuhr kann dabei durch das Eigengewicht selbsttätig und/oder mittels einer zusätzlichen Aufgabevorrichtung erfolgen, welche das noch nicht zerkleinerte Kunststoffmaterial zur Aufbereitungseinheit 2 hinbewegt. Zumeist wird ein Zufuhrschacht zur Aufnahme des zu verarbeitenden und/oder aufzubereitenden Kunststoffmaterials eingesetzt, mittels welchem die Weiterleitung an die Aufbereitungseinheit 2 erfolgt.

Die Aufbereitungseinheit 2 kann eine Zerkleinerungsvorrichtung 5 und eine Fördervorrichtung 6 umfassen, wobei bevorzugt die Zerkleinerungsvorrichtung 5 und/oder die Fördervorrichtung 6 in einem bevorzugt rohrförmig oder hohlzylinderförmig ausgebildeten Gehäuse 7 aufgenommen sowie drehbar gelagert ist bzw. sind. Der zumeist rotatorische Antrieb kann mit zumindest einem nicht näher bezeichneten ersten Antriebsmittel, wie z.B. einem Elektromotor, gegebenenfalls unter Zwischenschaltung eines Getriebes oder dergleichen, erfolgen. Die Fördervorrichtung 6 dient dazu, das zuvor von der Zerkleinerungsvorrichtung 5 zerkleinerte Kunststoffmaterial in Förderrichtung gemäß eingetragenem Pfeil weiter zu einem später noch detaillierter beschriebenen Übergabebereich 8 zu fördern. Im Übergabebereich 8 erfolgt die Übergabe des eine weiter verarbeitbare Stückgröße aufweisenden Kunststoffmaterials von der Fördervorrichtung 6 zur nachfolgend angeordneten Extrusionsvorrichtung 3. Der Übergabebereich 8 ist auf der von der Zerkleinerungsvorrichtung 5 abgewendeten Seite der Fördervorrichtung 6 angeordnet und bildet somit das Ende der Förderstrecke der Aufbereitungseinheit 2. Die bevorzugt schneckenförmig ausgebildete Fördervorrichtung 6 ist in Förderrichtung gesehen der Zerkleinerungsvorrichtung 5 nachgeordnet. Weiters bildet die Fördervorrichtung 6 einen ersten Förderabschnitt 9 aus und definiert auch noch eine erste Längsachse 10. Im Bereich des ersten Förderabschnitts 9 ist die Förderrichtung mit einem Pfeil veranschaulicht, wobei der Weitertransport in Axialrichtung erfolgt. Der erste Förderabschnitt 9 schließt in Förderrichtung gesehen unmittelbar an einen von der Zerkleinerungsvorrichtung 5 definierten Zerkleinerungsabschnitt 11 an. Die erste Längsachse 10 weist bei einer horizontalen Ausrichtung der Aufstandsfläche eine dazu bevorzugt parallel verlaufende Ausrichtung auf. Damit weist die erste Längsachse 10 eine liegende, horizontale Ausrichtung auf.

Zumeist wird zumindest die Fördervorrichtung 6 und gegebenenfalls auch die Zerkleinerungsvorrichtung 5 von einem zentralen Wellenkörper 12 gebildet und/oder sind diese am Wellenkörper 12 ausgebildet oder angeordnet. Am Außenumfang des Wellenkörpers 12 ist dazu zumindest ein schneckenförmig oder wendelförmig ausgebildeter erster Schneckensteg 13 zur Bildung der Fördervorrichtung 6 vorgesehen. Der umfängliche Längsverlauf des ersten Schneckenstegs 13 kann auch als helixförmig oder schraubenlinienförmig bezeichnet werden. Die Zerkleinerungsvorrichtung 5 kann von nicht näher bezeichneten Schneidmessern, welche am Wellenkörper 12 angeordnet oder ausgebildet sind, ausgebildet sein. Der Wellenkörper 12 kann seinerseits auch rohrförmig ausgebildet sein und in seinem Inneren auf einer Lagerachse abgestützt und/oder an dieser drehbar gelagert sein. Das zuvor beschriebene erste Antriebsmittel steht mit dem Wellenkörper 12 in Antriebsverbindung.

Im vorliegenden Ausführungsbeispiel ist der Wellenkörper 12 bevorzugt durchgängig über den Zerkleinerungsabschnitt 11 und den Förderabschnitt 9 erstreckend ausgebildet. Der Wellenkörper 12 kann dabei als einstückiger Bauteil oder aber auch aus mehreren miteinander verbundenen Wellenkörperteilen zusammengesetzt sein. Der Einfachheit halber wird dieser in seiner Gesamtheit als Wellenkörper 12 bezeichnet. An beiden in Axialrichtung voneinander beabstandeten Wellenenden, nämlich einem ersten Wellenende 14 und einem zweiten Wellenende 15, sind jeweils eine erste Lageranordnung 16 und eine dieser gegenüberliegend befindliche zweite Lageranordnung 17 vorgesehen. Die erste Lageranordnung 16 ist am Beginn des Zerkleinerungsabschnitts 11 und dem hier linksseitig befindlichen Ende des Wellenkörpers 12 und die zweite Lageranordnung 17 an dem hier rechtsseitig befindlichen Ende des Wellenkörpers 12 angeordnet. Damit kann eine stabile, zweischnittige Lagerung des Wellenkörpers 12 geschaffen werden. Die Aufnahme und Abstützung der jeweiligen Lagereinheiten der Lageranordnungen 16, 17 mit dem Lager oder den Lagern kann im Gehäuse 7 oder Gehäuseteilen der Aufbereitungsanlage 1 erfolgen.

Es wäre auch noch möglich, den ersten Schneckensteg 13 zur Bildung der Fördervorrichtung 6 nicht direkt am Wellenkörper 12, sondern an einer Hülse oder an einem Trägerrohr 26 anzuordnen oder auszubilden und diese Einheit am Wellenkörper 12 anzuordnen und an diesem drehfest zu halten. Diese Variante ist im Schnitt der Darstellung der Fig. 3 gezeigt. In diesem Fall bilden der Wellenkörper 12, das Trägerrohr 26 sowie der erste Schneckensteg 13 eine zusammengehörige Baueinheit aus. Das Trägerrohr 26 bildet bei dieser Ausführungsvariante als Zwischenstück einen Bauteil des Wellenkörpers 12 aus und stellt die äußere umlaufende Begrenzung des Wellenkörpers 12 dar.

Die Ausbildung der Aufbereitungseinheit 2 mit deren Zerkleinerungsvorrichtung 5 sowie deren Fördervorrichtung 6 kann z.B. derart gewählt werden, wie diese in der EP 0 934 144 B1 näher beschrieben ist. Deshalb wird hier, um unnötige Wiederholungen zu vermeiden, auf diese Beschreibung hingewiesen und Bezug genommen.

Der bei diesem Ausführungsbeispiel bevorzugt schneckenförmig oder wendelförmig ausgebildete erste Schneckensteg 13 der Fördervorrichtung 6 kann entweder über die Längserstreckung durchgehend und/oder über die Längserstreckung unterbrochen ausgebildet sein. Weiters ragt der erste Schneckensteg 13 in radialer Richtung gesehen um einen ersten Überstand 18 über den Wellenkörper 12 oder das Trägerrohr 26 darüber vor. Der erste Überstand 18 errechnet sich aus der Differenz der Abmessung (des Außendurchmessers) einer äußeren ersten Umhüllenden 34 des ersten Schneckenstegs 13 abzüglich des Außendurchmessers des Wellenkörpers 12 oder des Trägerrohrs 26 im Bereich des ersten Förderabschnitts 9 geteilt durch zwei. Die jeweiligen Abmessungen werden jeweils in einer in normaler Ausrichtung bezüglich der ersten Längsachse 10 ausgerichteten Ebene ermittelt. Der erste Überstand 18 definiert weiters eine Kreisringbreite einer ersten Kreisringfläche, wobei deren Zentrum in der ersten Längsachse 10 liegt.

Der lichte Querschnitt des hohlzylinderförmig ausgebildeten Gehäuses 7 ist bevorzugt als Kreisfläche ausgebildet. Die äußere Abmessung (der äußere Durchmesser) des ersten Schneckenstegs 13 ist geringfügig kleiner gewählt als der lichte Querschnitt des Innenraums des Gehäuses 7. Im Bereich der Zerkleinerungsvorrichtung 5 ist zumeist auch noch zumindest eine hin zur Zufuhrvorrichtung 4 geöffnete Zufuhröffnung 19 im Gehäuse 7 angeordnet oder ausgebildet, durch welche das Kunststoffmaterial hin zur Zerkleinerungsvorrichtung 5 gelangen kann.

Zur Übergabe des zerkleinerten Kunststoffmaterials von der Aufbereitungseinheit 2, insbesondere der Fördervorrichtung 6, hin zur Extrusionsvorrichtung 3 ist in einem Endbereich oder einem Endabschnitt des ersten Förderabschnitts 9 der Fördervorrichtung 6 im Übergabebereich 8 zumindest eine Austrittsöffnung 20 vorgesehen. Bei diesem Ausführungsbeispiel ist die zumindest eine Austrittsöffnung 20 bodenseitig im Gehäuse 7 angeordnet. Es wäre aber auch möglich, die Austrittsöffnung 20 oberhalb und/oder seitlich der Fördervorrichtung 6 im Gehäuse 7 anzuordnen. Die jeweilige Lage bzw. Anordnung der zumindest einen Austrittsöffnung 20 ist in Abhängigkeit von der Anordnung der nachgeordneten Extrusionsvorrichtung 3 zu wählen.

Die Extrusionsvorrichtung 3 kann zumindest eine Extruderschnecke 21 aufweisen, welche in einem Extrudergehäuse 22 aufgenommen sowie drehbar gelagert ist und mittels eines ebenfalls nicht näher bezeichneten weiteren Antriebsmittels in eine rotatorische Bewegung um eine weitere Längsachse 23 versetzt werden kann. Das zumindest eine weitere Antriebsmittel steht mit der zumindest einen Extruderschnecke 21 in Antriebsverbindung.

Die zumindest eine Extruderschnecke 21 definiert ihrerseits die weitere Längsachse 23 sowie einen weiteren bzw. zweiten Förderabschnitt 24. Zur Übernahme des zerkleinerten Kunststoffmaterials ist im Extrudergehäuse 22 zumindest eine Einfüllöffnung 25 vorgesehen. Die weitere Längsachse 23 weist bei einer horizontalen Ausrichtung der Aufstandsfläche ebenfalls eine dazu bevorzugt parallel verlaufende Ausrichtung auf. Damit weist die weitere Längsachse 23 auch eine liegende, horizontale Ausrichtung auf. Bezüglich einer Projektion auf eine Horizontalebene sind die erste Längsachse 10 und die weitere Längsachse 23 im Übergabebereich 8 einander kreuzend ausgerichtet. Der eingeschlossene Kreuzungswinkel zwischen den beiden Längsachsen 10, 23 kann beliebig gewählt werden. Zumeist oder bevorzugt beträgt dieser 90°. Der Kreuzungswinkel kann aber auch ein spitzer Winkel oder ein stumpfer Winkel sein.

Bei diesem hier gezeigten Ausführungsbeispiel sind die im hohlzylinderförmigen Gehäuse 7 angeordnete Austrittsöffnung 20 und die im Extrudergehäuse 22 angeordnete Einfüllöffnung 25 unmittelbar aneinander anschließend angeordnet und bilden gemeinsam eine Übergabeöffnung 27 aus. Da die Austrittsöffnung 20 hier bodenseitig und die Extrusionsvorrichtung 3 mit ihrer Extruderschnecke 21 unterhalb des Gehäuses 7 angeordnet ist, befinden sich die beiden Öffnungen 20, 25 übereinander sowie in einer bevorzugt einander überdeckenden Lage. Wesentlich ist dabei, dass die beiden Öffnungen 20, 25 miteinander für die Übergabe und Weiterleitung des zerkleinerten Kunststoffmaterials in Strömungsverbindung stehen und damit ein Weitertransport des aufzubereitenden Kunststoffmaterials vom ersten Förderabschnitt 9 der Fördervorrichtung 6 zum weiteren oder zweiten Förderabschnitt 24 der Extrusionsvorrichtung 3 möglich ist. Dieser Übergang ist bevorzugt dicht auszubilden.

Die Extruderschnecke 21 umfasst an ihrem äußeren Umfang zumindest einen weiteren oder zweiten Schneckensteg 28, welcher an einem Schnecken-Grundkörper 29 angeordnet oder ausgebildet ist, wie dies am besten aus der Fig. 2 zu ersehen ist. Der weitere oder zweite Schneckensteg 28 ragt ebenfalls in radialer Richtung gesehen um einen weiteren oder zweiten Überstand 30 über den Schnecken-Grundkörper 29 vor oder darüber hinaus.

Der weitere oder zweite Überstand 30 errechnet sich aus der Differenz der Abmessung (des Außendurchmessers) einer äußeren zweiten oder äußeren weiteren Umhüllenden 35 des weiteren oder zweiten Schneckenstegs 28 abzüglich des Außendurchmessers des Schnecken-Grundkörpers 29 im Bereich des weiteren oder zweiten Förderabschnitts 24 geteilt durch zwei. Es definiert auch der weitere oder zweite Überstand 30 eine Kreisringbreite einer weiteren oder zweiten Kreisringfläche, wobei deren Zentrum in der zweiten Längsachse 23 angeordnet ist.

Im Übergabebereich 8 sind die erste Längsachse 10 der Aufbereitungseinheit 2, welche vom Wellenkörper 12 definiert ist, und die weitere oder zweite Längsachse 23 einander kreuzend angeordnet. Dabei sei erwähnt, dass die Steigungsrichtungen (linksgängig oder rechtsgängig) bei der Fördervorrichtung 6 und auch bei der Extruderschnecke 21 frei gewählt werden können. Es können auch die Drehsinne (im Uhrzeigersinn, entgegen dem Uhrzeigersinn) der Fördervorrichtung 6 und/oder auch der Extruderschnecke 21 in Abhängigkeit von der jeweiligen Steigungsrichtung gewählt werden. Es ist stets darauf Bedacht zu nehmen, dass eine Weiterförderung des zerkleinerten Kunststoffmaterials in Förderrichtung ausgehend von der Fördervorrichtung 6 in den Übergabebereich 8 und weiter in die Extrusionsvorrichtung 3 sicher erfolgt. Im Übergabebereich 8 kann auch eine Umlaufrichtung (Drehrichtung) der Fördervorrichtung 6 bezüglich der Förderrichtung der Extruderschnecke 21 gewählt werden, welche entweder in dazu gleicher Umlaufrichtung (Drehrichtung) oder dazu entgegengesetzter Umlaufrichtung (Drehrichtung) ausgerichtet ist. Der Drehsinn sowie die Steigungsrichtung der Fördervorrichtung 6 ist in Abhängigkeit von der Anordnung und Ausbildung der Zerkleinerungsvorrichtung 5 mit deren zusammenwirkenden Schneidelementen zu wählen.

Weiters ist hier noch vorgesehen, dass im Übergabebereich 8 der über den Schnecken-Grundkörper 29 vorragende weitere Schneckensteg 28 in den vom ersten Schneckensteg 13 definierten ersten Überstand 18 bei einer Axialprojektion in Richtung der ersten Längsachse 10 der Aufbereitungseinheit 2, insbesondere deren Wellenkörper 12, gesehen, hineinragt. Die Annäherung der Extruderschnecke 21 mit ihrer äußeren weiteren Umhüllenden 35 um den weiteren oder zweiten Schneckensteg 28 herum kann zumindest soweit erfolgen, dass die äußere weitere Umhüllende 35 unmittelbar benachbart zum Wellenkörper 12 oder dem Trägerrohr 26 angeordnet ist.

Um eine Kollision des ersten Schneckenstegs 13 der Fördervorrichtung 6 mit der Extruderschnecke 21 und dem daran befindlichen weiteren oder zweiten Schneckensteg 28 zu vermeiden, endet der erste Schneckensteg 13, in Axialrichtung der ersten Längsachse 10 gesehen, bevorzugt unmittelbar vor der vom weiteren oder dem zweiten Schneckensteg 28 definierten äußeren weiteren Umhüllenden 35.

Durch das Hineinragen zumindest des weiteren oder des zweiten Schneckenstegs 28 sowie gegebenenfalls auch noch eines Teilabschnitts des Schnecken-Grundkörpers 29 in die vom ersten Überstand 18 des ersten Schneckenstegs 13 über den Umfang definierte erste Kreisringfläche, kann so bei der beidseitigen Lagerung des Wellenkörpers 12 an seinen beiden in Axialrichtung voneinander beabstandeten Wellenenden 14, 15 das vom ersten Schneckensteg 13 in den Übergabebereich 8 geförderte Kunststoffmaterial direkt in den Arbeitsbereich der Extruderschnecke 21 mit dem daran befindlichen weiteren oder zweiten Schneckensteg 28 gefördert werden. So wird die Übergabe und der Weitertransport im Übergabebereich 8 noch sicherer und es kann ein Verstopfen oder Verlegen der Übergabeöffnung 27 im Bereich zwischen den beiden Gehäusen 7, 22 nahezu bis vollständig vermieden werden.

Wie nun in der Fig. 3 als weitere mögliche, gegebenenfalls für sich eigenständige oder unabhängige Ausführungsvariante gezeigt ist, kann im Übergabebereich 8 ausgehend von der Fördervorrichtung 6 hin zur Extrusionsvorrichtung 3 noch ein Leitelement 31 vorgesehen sein. Das Leitelement 31 ist als Ringkörper ausgebildet und am Wellenkörper 12 und/oder dem Trägerrohr 26 angeordnet. Eine drehfeste Verbindung mit dem Wellenkörper 12 und/oder dem Trägerrohr 26 kann vorgesehen sein, muss aber nicht. Das Leitelement 31 ist in Axialrichtung gesehen auf der von der Zerkleinerungsvorrichtung 5 abgewendeten Seite der Fördervorrichtung 6 am Wellenkörper 12 angeordnet und somit im Bereich des zweiten Wellenendes 15 befindlich und damit der zweiten Lageranordnung 17 zugewendet. Weiters befindet sich das Leitelement 31 bezüglich des Querschnitts der Extruderschnecke 21 gesehen auf der von der Fördervorrichtung 6 abgewendeten Seite.

Ein Querschnitt des Leitelements 31 im Axialschnitt bezüglich der ersten Längsachse 10 ist in seinem der Extruderschnecke 21 zugewendeten Abschnitt geringfügig kleiner ausgebildet als die vom weiteren Schneckensteg 28 definierte äußere weitere Umhüllende 35. Zwischen dem Leitelement 31 und dem Inneren des Gehäuses 7 kann noch eine Dichtanordnung 32 vorgesehen sein, um einen Durchtritt von Kunststoffmaterial hin zur zweiten Lageranordnung 17 verringern oder überhaupt unterbinden zu können. Damit kann je nach gewähltem Drehsinn oder gewählter Umlaufrichtung der Extruderschnecke 21 eine noch bessere Übernahme in die Extrusionsvorrichtung 3 erzielt werden. Das Leitelement 31 weist somit in seinem der Extruderschnecke 21 zugewendeten Teilabschnitt im Axialschnitt gesehen eine Hohlkehle auf, deren Radius geringfügig größer ist als ein Radius der äußeren weiteren Umhüllenden 35 des weiteren Schneckenstegs 28.

Um eine noch nähere Anordnung der beiden Längsachsen 10, 23 zueinander zu erzielen und den Abstand in deren Kreuzungsbereich zu verringern, wäre es zusätzlich oder unabhängig davon auch noch möglich, in der Oberfläche des Wellenkörper 12 eine Vertiefung 33 vorzusehen oder auszubilden. Dies kann bei ausreichender Festigkeit des Wellenkörpers 12 erfolgen, um diesen nicht zu weit zu schwächen. Der Querschnitt der umlaufenden Vertiefung ist dem Querschnitt der äußeren weiteren Umhüllenden 35 des weiteren oder des zweiten Schneckenstegs 28 anzupassen.

Die Vertiefung 33 weist im Axialschnitt durch die erste Längsachse 10 eine konkave Krümmung auf, wobei ein Radius der Vertiefung geringfügig größer ist als ein Radius der vom weiteren Schneckensteg 28 definierten äußeren weiteren Umhüllenden 35 in der gleichen Ebene. Um eine ungehinderte Drehbewegung der Zufuhrvorrichtung 4, insbesondere deren Wellenkörper 12, durchführen zu können, ist die Vertiefung 33 als über den Umfang durchlaufende nutförmige Vertiefung auszubilden. Diese zuvor beschriebene Ausführungsvariante mit der Vertiefung 33 ist in der Fig. 1 an der der Extrusionsvorrichtung 3 gegenüberliegenden Seite des Wellenkörpers 12 mit einer strichlierten Linie angedeutet.

Die beiden Umhüllenden 34, 35, welche jeweils von den äußeren Stirnflächen des jeweiligen Schneckenstegs 13, 28 definiert sind, sind gedachte Zylinderflächen, deren Zentrum in der jeweiligen Längsachse 10, 23 liegt und deren Querschnitt jeweils in einer in normaler Richtung bezüglich der Längsachse 10, 23 ausgerichteten Ebene liegt. Die weitere Umhüllende 35 des weiteren Schneckenstegs 28 der Extruderschnecke 21 kann auch als zweite Umhüllende 35 bezeichnet werden. Bezogen auf die beiden zuvor beschriebenen Kreisringflächen, deren Kreisringbreite entweder vom ersten Überstand 18 oder vom weiteren bzw. dem zweiten Überstand 30 definiert ist, sind die Umhüllenden 34, 35 jeweils um den äußeren Umfang der jeweiligen Kreisringfläche verlaufend angeordnet. So wird die Kreisringfläche, welche vom ersten Überstand 18 definiert ist, als erste Kreisringfläche bezeichnet. Jene vom weiteren oder dem zweiten Überstand 30 definierte Kreisringfläche wird hier als weitere oder zweite Kreisringfläche bezeichnet.

Die zuvor beschriebene Aufbereitungsanlage 1 dient aber auch zur Durchführung eines Verfahrensablaufs zur Aufbereitung von thermoplastischem Kunststoffmaterial für dessen Wiederverwertung. Dabei wird das aufzubereitende thermoplastische Kunststoffmaterial bei der Zufuhrvorrichtung 4 aufgegeben und in der Aufbereitungseinheit 2 mittels der Zerkleinerungsvorrichtung 5 zerkleinert und von der daran anschließend befindlichen Fördervorrichtung 6 mit deren zumindest einem ersten Schneckensteg 13 entlang des ersten Förderabschnitts 9 in den Übergabebereich 8 gefördert. Im Übergabebereich 8 wird das von der Fördervorrichtung 6 angeförderte Kunststoffmaterial an die Extrusionsvorrichtung 3 und deren zumindest eine Extruderschnecke 21 auf direktem Weg übergeben.

Dabei ist noch zusätzlich vorgesehen, dass das zerkleinerte Kunststoffmaterial während seiner Förderbewegung entlang des ersten Förderabschnitts 9 hin zum Übergabebereich 8 zumindest mittels der Fördervorrichtung 6 auf eine Übergabetemperatur mit einem mittleren Temperaturwert erwärmt wird, der mindestens im Bereich der Erweichungstemperatur des jeweiligen Kunststoffmaterials liegt. Einzelne Teile der Kunststoffmasse können bereits angeschmolzen sein, sodass dieser Temperaturwert auch dem Beginn der Plastifikation des Kunststoffmaterials entspricht. Als Übergabetemperatur wird dabei jene Temperatur oder ein Temperaturbereich in vorbestimmten Grenzen verstanden, bei welcher oder bei welchem im Übergabebereich 8 das von der Fördervorrichtung 6 vorerwärmte Kunststoffmaterial an die nachfolgend befindliche Extrusionsvorrichtung 3 übergeben wird.

In der Kunststoffbearbeitung oder Kunststoffbehandlung wird unter Plastifizieren das Umwandeln von Kunststoffen, insbesondere in zerkleinerter Stückgröße, durch Einbringen von Temperatur und/oder Druck verstanden. Zumeist erfolgt dies durch Reibung, insbesondere innerer Reibung. Die Viskosität des erwärmten Kunststoffmaterials wird in diesem Fall verringert oder erniedrigt.

Jene im Zuge der Förderbewegung des Kunststoffmaterials eingebrachte Wärmemenge oder Wärmeenergie braucht in der nachfolgenden Extrusionsvorrichtung 3 nicht mehr von dieser aufgebracht werden. Das erwärmte Kunststoffmaterial weist somit im Übergabebereich 8 die Übergabetemperatur mit einem mittleren Temperaturwert auf, welcher mindestens im Bereich der Erweichungstemperatur des Kunststoffmaterials liegt. Der mittlere Temperaturwert der Erweichungstemperatur kann z.B. mittels der Vicat-Erweichungstemperatur (VST) angegeben oder mit diesem Verfahren ermittelt werden. In der nachfolgend angeordneten Extrusionsvorrichtung 3 erfolgt die weitere Aufbereitung des Kunststoffmaterials mittels der Extruderschnecke 21. Die Extrusionsvorrichtung 3 kann auch als Aufbereitungsvorrichtung, als Aufschmelzvorrichtung oder als Plastifiziervorrichtung bezeichnet werden.

Das Kunststoffmaterial kann aber auch im Übergabebereich eine Übergabetemperatur mit einem Temperaturwert aufweisen, bei welchem bereits die Schmelztemperatur des Kunststoffmaterials erreicht ist. Außerdem kann ein möglicher Temperaturwert des Kunststoffmaterials im Übergabebereich z.B. zumindest 100°C betragen. Dies jedoch nur bei Kunststoffen, welche sich bei derartigen Temperaturwerten noch nicht zersetzen.

Am Beginn des Aufbereitungsvorgangs und dem damit verbundenen Befüllen der Zufuhrvorrichtung 4 mit dem zu zerkleinernden Kunststoffmaterial weist dieses eine bestimmte Aufgabetemperatur, zumeist die Umgebungstemperatur auf. Die Übergabetemperatur weist dazu einen höheren Temperaturwert auf. In der Extrusionsvorrichtung 3 erfolgt der endgültige Aufschmelz- und Behandlungsvorgang des Kunststoffmaterials, wobei dieses von der Extrusionsvorrichtung 3 mit einer Abgabetemperatur abgegeben wird.

Bevorzugt kann mittels der Fördervorrichtung 6 bis zu 20% der erforderlichen Wärmemenge zum Erwärmen des Kunststoffmaterials ausgehend von der Aufgabetemperatur auf die Abgabetemperatur des Kunststoffmaterials aus der Extrusionsvorrichtung 3 in das Kunststoffmaterial eingebracht werden. Die Wärmemenge kann auch als Enthalpie bezeichnet werden. Das Erwärmen des Kunststoffmaterials wird mittels der Rotationsbewegung der Fördervorrichtung 6 und deren zumindest einen ersten Schneckensteg 13 auf mechanischer Basis durchgeführt. Die zuvor angeführte Abgabetemperatur des Kunststoffmaterials aus der Extrusionsvorrichtung 3 ist jene Temperatur bzw. jener Temperaturwert, auf welche oder auf welchen das Kunststoffmaterial während seines Durchtritts im Extruder durch den dabei erfolgten Verarbeitungsvorgang erwärmt worden ist und direkt im Austrittsbereich aus der Extrusionsvorrichtung 3 aufweist.

Weiters kann noch vorgesehen sein, dass dem Kunststoffmaterial während seiner Förderbewegung zumindest entlang des ersten Förderabschnitts 9 eine zusätzliche Wärmemenge zugeführt und/oder eine Wärmemenge entzogen wird. Dies kann z.B. mittels einer Temperiervorrichtung 36 erfolgen, welche am und/oder im Gehäuse 7 angeordnet oder ausgebildet ist. Unabhängig davon oder zusätzlich dazu ist es auch noch möglich, die Temperiervorrichtung 36 im Wellenkörper 12 anzuordnen oder darin auszubilden. Damit kann eine noch gezieltere Temperatursteuerung für das hindurchzuführende Kunststoffmaterial durchgeführt werden. Diese Möglichkeiten sind in der Fig. 2 angedeutet. Auf die Darstellung von Versorgungsleitungen wurde der besseren Übersichtlichkeit halber verzichtet. Damit wird die Möglichkeit geschaffen eine zusätzliche Wärmemenge dem innerhalb des Gehäuses 7 befindlichen Kunststoffmaterial zuzuführen. Es könnte aber auch die Temperiervorrichtung 36 dazu dienen, dem innerhalb des Gehäuses 7 befindlichen Kunststoffmaterial ein gewisses Ausmaß an der bereits im Kunststoffmaterial enthaltenen Wärmemenge zu entziehen und damit abzukühlen. Es wäre aber auch eine Kombination bzw. ein hintereinander Anordnen von Heizzonen und Kühlzonen mittels der Temperiervorrichtung 36 zumindest entlang des ersten Förderabschnitts 9 denkbar.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Aufbereitungsanlage | 31 | Leitelement |
| 2 | Aufbereitungseinheit | 32 | Dichtanordnung |
| 3 | Extrusionsvorrichtung | 33 | Vertiefung |
| 4 | Zufuhrvorrichtung | 34 | erste Umhüllende |
| 5 | Zerkleinerungsvorrichtung | 35 | weitere Umhüllende |
| 6 | Fördervorrichtung | 36 | Temperiervorrichtung |
| 7 | Gehäuse | | |
| 8 | Übergabebereich | | |
| 9 | erster Förderabschnitt | | |
| 10 | erste Längsachse | | |
| 11 | Zerkleinerungsabschnitt | | |
| 12 | Wellenkörper | | |
| 13 | erster Schneckensteg | | |
| 14 | erstes Wellenende | | |
| 15 | zweites Wellenende | | |
| 16 | erste Lageranordnung | | |
| 17 | zweite Lageranordnung | | |
| 18 | erster Überstand | | |
| 19 | Zufuhröffnung | | |
| 20 | Austrittsöffnung | | |
| 21 | Extruderschnecke | | |
| 22 | Extrudergehäuse | | |
| 23 | weitere Längsachse | | |
| 24 | weiterer Förderabschnitt | | |
| 25 | Einfüllöffnung | | |
| 26 | Trägerrohr | | |
| 27 | Übergabeöffnung | | |
| 28 | weiterer Schneckensteg | | |
| 29 | Schnecken-Grundkörper | | |
| 30 | weiterer Überstand | | |

## Patentansprüche

1. Verfahren zur Aufbereitung von Kunststoffmaterial, insbesondere von thermoplastischem Kunststoffmaterial, für dessen Wiederverwertung, mittels einer Aufbereitungsanlage (1), bei dem folgende Schritte durchgeführt werden:
- Bereitstellen einer Zufuhrvorrichtung (4), wobei das aufzubereitende Kunststoffmaterial bei der Zufuhrvorrichtung (4) aufgegeben wird,
- Bereitstellen einer Aufbereitungseinheit (2) mit
- einem hohlzylinderförmig ausgebildeten Gehäuse (7),
- einem Wellenkörper (12) mit einer am Wellenkörper (12) angeordneten oder ausgebildeten Zerkleinerungsvorrichtung (5) und einer in Förderrichtung an die Zerkleinerungsvorrichtung (5) anschließenden Fördervorrichtung (6) umfassend zumindest einen ersten Schneckensteg (13),
- wobei der Wellenkörper (12) eine erste Längsachse (10) definiert,
- wobei der erste Schneckensteg (13) den Wellenkörper (12) in radialer Richtung um einen ersten Überstand (18) überragt und vom ersten Überstand (18) eine erste Kreisringfläche mit einer äußeren ersten Umhüllenden (34) definiert ist, wobei eine Ringbreite der ersten Kreisringfläche dem ersten Überstand (18) entspricht,
- wobei von der Fördervorrichtung (6) in Axialrichtung des Wellenkörpers (12) ein erster Förderabschnitt (9) definiert wird,
- wobei der Wellenkörper (12) im Gehäuse (7) aufgenommen sowie an seinem ersten Wellenende (14) mittels einer ersten Lageranordnung (16) und an seinem in Axialrichtung davon beabstandeten zweiten Wellenende (15) mittels einer zweiten Lageranordnung (17) am Gehäuse (7) drehbar gelagert ist, und
- wobei das Gehäuse (7) im Bereich der Zerkleinerungsvorrichtung (5) zumindest eine hin zur Zufuhrvorrichtung (4) geöffnete Zufuhröffnung (19) aufweist, und
- dabei das aufzubereitende Kunststoffmaterial von der Zerkleinerungsvorrichtung (5) zerkleinert und mittels des zumindest einen ersten Schneckenstegs (13) der Fördervorrichtung (6) entlang des ersten Förderabschnitts (9) hin in Richtung auf das zweite Wellenende (15) gefördert wird,
- Bereitstellen einer Extrusionsvorrichtung (3) mit
- einem Extrudergehäuse (22),
- zumindest einer Extruderschnecke (21), umfassend einen Schnecken-Grundkörper (29) und zumindest einen weiteren Schneckensteg (28),
- wobei der zumindest eine weitere Schneckensteg (28) der Extruderschnecke (21) eine äußere weitere Umhüllende (35) definiert,
- wobei die Extruderschnecke (21) im Extrudergehäuse (22) aufgenommen ist und eine weitere Längsachse (23) definiert, und
- wobei die zumindest eine Extruderschnecke (21) einen weiteren Förderabschnitt (24) definiert und in Förderrichtung gesehen die Extrusionsvorrichtung (3) der Aufbereitungseinheit (2) nachgeordnet ist,
- Bereitstellen eines Übergabebereichs (8) mit einer Austrittsöffnung (20) aus dem Gehäuse (7) und einer Einfüllöffnung (25) in das Extrudergehäuse (22), wobei der Übergabebereich (8) in einem Endabschnitt des ersten Förderabschnitts (9) der Fördervorrichtung (6) angeordnet ist und der erste Förderabschnitt (9) im Übergabebereich (8) mit dem zweiten Förderabschnitt (24) in Strömungsverbindung steht,
- wobei bezüglich einer Projektion auf eine Horizontalebene die erste Längsachse (10) und die weitere Längsachse (23) im Übergabebereich (8) einander kreuzend ausgerichtet sind, und
- wobei das von der Fördervorrichtung (6) geförderte Kunststoffmaterial im Übergabereich (8) an die Extrusionsvorrichtung (3) und deren zumindest eine Extruderschnecke (21) übergeben wird, wobei
- das zerkleinerte Kunststoffmaterial während seiner Förderbewegung entlang des ersten Förderabschnitts (9) hin zum Übergabebereich (8) zumindest mittels der Fördervorrichtung (6) auf eine Übergabetemperatur mit einem mittleren Temperaturwert erwärmt wird, wobei der mittlere Temperaturwert der Übergabetemperatur mindestens im Bereich der Erweichungstemperatur des Kunststoffmaterials liegt,
- der zumindest eine weitere Schneckensteg (28) der Extruderschnecke (21), in axialer Projektionsrichtung in Richtung der ersten Längsachse (10) des Wellenkörpers (12) gesehen, derart angeordnet ist, dass der zumindest eine weitere Schneckensteg (28) in Richtung auf die erste Längsachse (10) in die vom ersten Schneckensteg (13) mit seinem ersten Überstand (18) definierte erste Kreisringfläche hineinragt, und
- das zerkleinerte Kunststoffmaterial im Übergabereich (8) mit seiner Übergabetemperatur mittels des zumindest einen ersten Schneckenstegs (13) direkt innerhalb die vom zumindest einen weiteren Schneckensteg (28) der Extruderschnecke (21) definierte weitere Umhüllende (35) hineingefördert wird.

2. Verfahren nach Anspruch 1, **dadurch gekennzeichnet, dass** der Temperaturwert der Übergabetemperatur des Kunststoffmaterials zumindest der Schmelztemperatur des Kunststoffmaterials entspricht.

3. Verfahren nach Anspruch 1 oder 2, **dadurch gekennzeichnet, dass** der Temperaturwert der Übergabetemperatur des Kunststoffmaterials zumindest 100°C beträgt.

4. Verfahren nach einem der vorhergehenden Ansprüche, **dadurch gekennzeichnet, dass** mittels der Fördervorrichtung (6) bis zu 20% der zum Erwärmen des Kunststoffmaterials von der Aufgabetemperatur auf eine Abgabetemperatur des Kunststoffmaterials aus der Extrusionsvorrichtung (3) erforderlichen Wärmemenge in das Kunststoffmaterial eingebracht werden.

5. Verfahren nach einem der vorhergehenden Ansprüche, **dadurch gekennzeichnet, dass** das Erwärmen des Kunststoffmaterials mittels der Rotationsbewegung der Fördervorrichtung (6) und deren zumindest einen ersten Schneckensteg (13) auf mechanischer Basis durchgeführt wird.

6. Verfahren nach einem der vorhergehenden Ansprüche, **dadurch gekennzeichnet, dass** dem Kunststoffmaterial während seiner Förderbewegung zumindest entlang des ersten Förderabschnitts (9) eine zusätzliche Wärmemenge zugeführt und/oder eine Wärmemenge entzogen wird.

7. Aufbereitungsanlage (1) für Kunststoffmaterial, insbesondere zur Durchführung des Verfahrens nach einem der vorhergehenden Ansprüche zur Aufbereitung von thermoplastischem Kunststoffmaterial für dessen Wiederverwertung, umfassend
- eine Zufuhrvorrichtung (4),
- eine Aufbereitungseinheit (2) mit
- einem hohlzylinderförmig ausgebildeten Gehäuse (7),
- einem Wellenkörper (12), mit einer am Wellenkörper (12) angeordneten oder ausgebildeten Zerkleinerungsvorrichtung (5) und einer in Förderrichtung an die Zerkleinerungsvorrichtung (5) anschließenden Fördervorrichtung (6) umfassend zumindest einen ersten Schneckensteg (13),
- wobei der Wellenkörper (12) eine erste Längsachse (10) definiert,
- wobei der erste Schneckensteg (13) den Wellenkörper (12) in radialer Richtung um einen ersten Überstand (18) überragt und vom ersten Überstand (18) eine erste Kreisringfläche mit einer äußeren ersten Umhüllenden (34) definiert ist, wobei eine Ringbreite der ersten Kreisringfläche dem ersten Überstand (18) entspricht,
- wobei die Fördervorrichtung (6) in Axialrichtung des Wellenkörpers (12) einen ersten Förderabschnitt (9) definiert,
- wobei der Wellenkörper (12) im Gehäuse (7) aufgenommen sowie an seinem ersten Wellenende (14) mittels einer ersten Lageranordnung (16) und an seinem in Axialrichtung davon beabstandeten zweiten Wellenende (15) mittels einer zweiten Lageranordnung (17) am Gehäuse (7) drehbar gelagert ist, und
- wobei das Gehäuse (7) im Bereich der Zerkleinerungsvorrichtung (5) zumindest eine hin zur Zufuhrvorrichtung (4) geöffnete Zufuhröffnung (19) aufweist,
- eine Extrusionsvorrichtung (3) mit
- einem Extrudergehäuse (22),
- zumindest einer Extruderschnecke (21), umfassend einen Schnecken-Grundkörper (29) und zumindest einen weiteren Schneckensteg (28),
- wobei der zumindest eine weitere Schneckensteg (28) der Extruderschnecke (21) eine äußere weitere Umhüllende (35) definiert,
- wobei die Extruderschnecke (21) im Extrudergehäuse (22) aufgenommen ist und eine weitere Längsachse (23) definiert, und
- wobei die zumindest eine Extruderschnecke (21) einen weiteren Förderabschnitt (24) definiert und in Förderrichtung gesehen die Extrusionsvorrichtung (3) der Aufbereitungseinheit (2) nachgeordnet ist,
- einen Übergabebereich (8) mit einer Austrittsöffnung (20) aus dem Gehäuse (7) und einer Einfüllöffnung (25) in das Extrudergehäuse (22), wobei der Übergabebereich (8) in einem Endabschnitt des ersten Förderabschnitts (9) der Fördervorrichtung (6) angeordnet ist und der erste Förderabschnitt (9) im Übergabebereich (8) mit dem zweiten Förderabschnitt (24) in Strömungsverbindung steht, und
- wobei bezüglich einer Projektion auf eine Horizontalebene die erste Längsachse (10) und die weitere Längsachse (23) im Übergabebereich (8) einander kreuzend ausgerichtet sind,
**dadurch gekennzeichnet,**
- **dass** zumindest der weitere Schneckensteg (28) der Extruderschnecke (21), in axialer Projektionsrichtung in Richtung der ersten Längsachse (10) des Wellenkörpers (12) gesehen, in Richtung auf die erste Längsachse (10) in die vom ersten Schneckensteg (13) mit seinem ersten Überstand (18) definierte erste Kreisringfläche hineinragt.

8. Aufbereitungsanlage (1) nach Anspruch 7, **dadurch gekennzeichnet, dass** ein Teilabschnitt des Schnecken-Grundkörpers (29) der Extruderschnecke (21) in die vom ersten Überstand (18) des ersten Schneckenstegs (13) definierte erste Kreisringfläche hineinragt.

9. Aufbereitungsanlage (1) nach Anspruch 7 oder 8, **dadurch gekennzeichnet, dass** ein Trägerrohr (26) vorgesehen ist, an welchem Trägerrohr (26) der erste Schneckensteg (13) angeordnet oder ausgebildet ist und das Trägerrohr (26) am Wellenkörper (12) angeordnet und mit dem Wellenkörper (12) drehfest zu einer zusammengehörigen Baueinheit verbunden ist.

10. Aufbereitungsanlage (1) nach einem der Ansprüche 7 bis 9, **dadurch gekennzeichnet, dass** die äußere weitere Umhüllende (35) des weiteren Schneckenstegs (28) der Extruderschnecke (21) unmittelbar benachbart zum Wellenkörper (12) der Aufbereitungseinheit (2) angeordnet ist.

11. Aufbereitungsanlage (1) nach einem der Ansprüche 7 bis 10, **dadurch gekennzeichnet, dass** der erste Schneckensteg (13) in Richtung der ersten Längsachse (10) gesehen vor der vom weiteren Schneckensteg (28) definierten äußeren weiteren Umhüllenden (35) endet.

12. Aufbereitungsanlage (1) nach einem der Ansprüche 7 bis 11, **dadurch gekennzeichnet, dass** ein Leitelement (31) vorgesehen ist, welches Leitelement (31) in Axialrichtung auf der von der Zerkleinerungsvorrichtung (5) abgewendeten Seite der Fördervorrichtung (6) am Wellenkörper (12) angeordnet ist und dessen Querschnitt im Axialschnitt gesehen in seinem der Extruderschnecke (21) zugewendeten Abschnitt geringfügig kleiner ausgebildet ist als die vom weiteren Schneckensteg (28) definierte äußere weitere Umhüllende (35).

13. Aufbereitungsanlage (1) nach einem der Ansprüche 7 bis 12, **dadurch gekennzeichnet, dass** eine Vertiefung (33) im Wellenkörper (12) vorgesehen ist, welche Vertiefung (33) über den Umfang des Wellenkörpers (12) durchlaufend ausgebildet ist und deren Querschnitt im Axialschnitt gesehen in dem der Extruderschnecke (21) zugewendeten Abschnitt geringfügig größer ausgebildet ist als die vom weiteren Schneckensteg (28) definierte äußere weitere Umhüllende (35).

14. Aufbereitungsanlage (1) nach einem der Ansprüche 7 bis 13, **dadurch gekennzeichnet, dass** eine Temperiervorrichtung (36) vorgesehen ist, welche Temperiervorrichtung (36) am und/oder im Gehäuse (7) und/oder im Wellenkörper (12) angeordnet oder ausgebildet ist, wobei mittels der Temperiervorrichtung (36) dem Kunststoffmaterial zumindest entlang des ersten Förderabschnitts (9) eine Wärmemenge zugeführt und/oder abgeführt werden kann.

## Claims

1. A method for processing plastic material, in particular thermoplastic material, for the recycling thereof, by means of a processing plant (1), in which the following steps are carried out:
- providing a feed device (4), wherein the plastic material to be processed is discharged at the feed device (4),
- providing a processing unit (2) having
- a hollow-cylindrically designed housing (7),
- a shaft body (12) with a comminuting device (5) arranged or formed on the shaft body (12) and a conveying device (6) adjoining the comminuting device (5) in a conveying direction, the conveying device (6) comprising at least one first screw flight (13),
- wherein the shaft body (12) defines a first longitudinal axis (10),
- wherein the first screw flight (13) projects beyond the shaft body (12) in a radial direction by a first projection (18), and the first projection (18) defines a first circular ring surface having an outer first envelope (34), wherein a ring width of the first circular ring surface corresponds to the first projection (18),
- wherein the conveying device (6) defines a first conveying section (9) in an axial direction of the shaft body (12),
- wherein the shaft body (12) is accommodated in the housing (7) and is rotatably mounted on the housing (7) on its first shaft end (14) by means of a first bearing arrangement (16) and on its second shaft end (15) spaced apart therefrom in an axial direction by means of a second bearing arrangement (17), and
- wherein the housing (7) has, in the region of the comminuting device (5), at least one feed opening (19) open towards the feed device (4), and
- in this regard, the plastic material to be processed is comminuted by the comminuting device (5) and conveyed along the first conveying section (9), in the direction toward the second shaft end (15), by means of the at least one first screw flight (13) of the conveying device (6),
- providing an extrusion device (3) having
- an extruder housing (22),
- at least one extruder screw (21) comprising a screw base body (29) and at least one further screw flight (28),
- wherein the at least one further screw flight (28) of the extruder screw (21) defines an outer further envelope (35),
- wherein the extruder screw (21) is accommodated in the extruder housing (22) and defines a further longitudinal axis (23), and
- wherein the at least one extruder screw (21) defines a further conveying section (24) and the extrusion device (3) is arranged behind, when viewed in the conveying direction, the processing unit (2),
- providing a transfer region (8) with a discharge opening (20) out of the housing (7) and a fill opening (25) into the extruder housing (22), wherein the transfer region (8) is arranged in an end section of the first conveying section (9) of the conveying device (6), and the first conveying section (9) is flow-connected to the second conveying section (24) in the transfer region (8),
- wherein with respect to a projection onto a horizontal plane, the first longitudinal axis (10) and the further longitudinal axis (23) are oriented such that they intersect in the transfer region (8), and
- wherein, in the transfer region (8), the plastic material conveyed by the conveying device (6) is transferred to the extrusion device (3) and its at least one extruder screw (21),
wherein
- during its conveying movement along the first conveying section (9) toward the transfer region (8) at least by means of the conveying device (6), the comminuted plastic material is heated to a transfer temperature with a mean temperature value, wherein the mean temperature value of the transfer temperature is at least in the range of the softening temperature of the plastic material,
- the at least one further screw flight (28) of the extruder screw (21), when viewed in the axial projection direction in the direction of the first longitudinal axis (10) of the shaft body (12), is arranged such that the at least one further screw flight (28) protrudes in the direction toward the first longitudinal axis (10) into the first circular ring surface defined by the first screw flight (13) with its first projection (18), and
- in the transfer region (8), the comminuted plastic material with its transfer temperature is conveyed, by means of the at least one first screw flight (13), directly into the further envelope (35) defined by the at least one further screw flight (28) of the extruder screw (21).

2. The method according to claim 1, **characterized in that** the temperature value of the transfer temperature of the plastic material corresponds to at least the melting temperature of the plastic material.

3. The method according to claim 1 or 2, **characterized in that** the temperature value of the transfer temperature of the plastic material is at least 100 °C.

4. The method according to one of the preceding claims, **characterized in that** up to 20% of the amount of heat required for heating the plastic material from the input temperature to an output temperature of the plastic material out of the extrusion device (3) is introduced into the plastic material by means of the conveying device (6).

5. The method according to one of the preceding claims, **characterized in that** the heating of the plastic material is carried out on a mechanical basis by means of the rotational movement of the conveying device (6) and its at least one first screw flight (13).

6. The method according to one of the preceding claims, **characterized in that** an additional amount of heat is introduced into and/or an amount of heat is withdrawn from the plastic material during its conveying movement at least along the first conveying section (9).

7. A processing plant (1) for plastic material, in particular for performing the method according to one of the preceding claims for processing thermoplastic material for the recycling thereof, comprising
- a feed device (4),
- a processing unit (2) having
- a hollow-cylindrically designed housing (7),
- a shaft body (12) with a comminuting device (5) arranged or formed on the shaft body (12) and a conveying device (6) adjoining the comminuting device (5) in a conveying direction, the conveying device (6) comprising at least one first screw flight (13),
- wherein the shaft body (12) defines a first longitudinal axis (10),
- wherein the first screw flight (13) projects beyond the shaft body (12) in a radial direction by a first projection (18), and the first projection (18) defines a first circular ring surface having an outer first envelope (34), wherein a ring width of the first circular ring surface corresponds to the first projection (18),
- wherein the conveying device (6) defines a first conveying section (9) in an axial direction of the shaft body (12),
- wherein the shaft body (12) is accommodated in the housing (7) and is rotatably mounted on the housing (7) on its first shaft end (14), by means of a first bearing arrangement (16), and on its second shaft end (15) spaced apart therefrom in an axial direction, by means of a second bearing arrangement (17), and
- wherein the housing (7) has, in the region of the comminuting device (5), at least one feed opening (19) open towards the feed device (4),
- an extrusion device (3) having
- an extruder housing (22),
- at least one extruder screw (21) comprising a screw base body (29) and at least one further screw flight (28),
- wherein the at least one further screw flight (28) of the extruder screw (21) defines an outer further envelope (35),
- wherein the extruder screw (21) is accommodated in the extruder housing (22) and defines a further longitudinal axis (23), and
- wherein the at least one extruder screw (21) defines a further conveying section (24) and the extrusion device (3) is arranged behind, when viewed in the conveying direction, the processing unit (2),
- a transfer region (8) with a discharge opening (20) out of the housing (7) and a fill opening (25) into the extruder housing (22), wherein the transfer region (8) is arranged in an end section of the first conveying section (9) of the conveying device (6), and the first conveying section (9) is flow-connected to the second conveying section (24) in the transfer region (8), and
- wherein, with respect to a projection onto a horizontal plane, the first longitudinal axis (10) and the further longitudinal axis (23) are oriented such that they intersect in the transfer region (8),
**characterized in that**
- at least the further screw flight (28) of the extruder screw (21), when viewed in the axial projection direction in the direction of the first longitudinal axis (10) of the shaft body (12) protrudes in the direction toward the first longitudinal axis (10), into the first circular ring surface defined by the first screw flight (13) with its first projection (18).

8. The processing plant (1) according to claim 7, **characterized in that** a portion of the screw base body (29) of the extruder screw (21) protrudes into the first circular ring surface defined by the first projection (18) of the first screw flight (13).

9. The processing plant (1) according to claim 7 or 8, **characterized in that** a carrier tube (26) is provided, on which carrier tube (26) the first screw flight (13) is arranged or formed, and the carrier tube (26) is arranged on the shaft body (12) and is connected in a torque-proof manner to the shaft body (12) to form an assembly unit.

10. The processing plant (1) according to one of claims 7 to 9, **characterized in that** the outer further envelope (35) of the further screw flight (28) of the extruder screw (21) is arranged directly adjacent to the shaft body (12) of the processing unit (2).

11. The processing plant (1) according to one of claims 7 to 10, **characterized in that** the first screw flight (13) ends, when viewed in the direction of the first longitudinal axis (10), before the outer further envelope (35) defined by the further screw flight (28).

12. The processing plant (1) according to one of claims 7 to 11, **characterized in that** a guide element (31) is provided, which guide element (31) is arranged on the shaft body (12) in an axial direction, on that side of the conveying device (6) which faces away from the comminuting device (5), and the cross-section thereof, viewed in an axial section, is formed slightly smaller in its section facing the extruder screw (21) than the outer further envelope (35) defined by the further screw flight (28).

13. The processing plant (1) according to one of claims 7 to 12, **characterized in that** a recess (33) is provided in the shaft body (12), which recess (33) is formed continuously across the circumference of the shaft body (12) and the cross-section thereof, viewed in an axial section, is formed slightly greater in the section facing the extruder screw (21) than the outer further envelope (35) defined by the further screw flight (28).

14. The processing plant(1) according to one of claims 7 to 13, **characterized in that** a temperature-control device (36) is provided, which temperature-control device (36) is arranged or formed on and/or in the housing (7) and/or in the shaft body (12), wherein by means of the temperature-control device (36), an amount of heat may be introduced into and/or withdrawn from the plastic material at least along the first conveying section (9).

## Revendications

1. Procédé de traitement de matière plastique, plus particulièrement une matière plastique thermoplastique, pour son recyclage, au moyen d'une installation de traitement (1), dans lequel les étapes suivantes sont exécutées :
- mise à disposition d'un dispositif d'alimentation (4), dans lequel la matière plastique à traiter est transférée sur le dispositif d'alimentation (4),
- mise à disposition d'une unité de traitement (2) avec
- un boîtier (7) de forme cylindrique creuse,
- un corps d'arbre (12) avec un dispositif de broyage (5) disposé ou formé sur le corps d'arbre (12) et un dispositif de convoyage (6) se raccordant, dans la direction de convoyage, au dispositif de broyage (5), comprenant au moins un premier filet de vis sans fin (13),
- dans lequel le corps d'arbre (12) définit un premier axe longitudinal (10),
- dans lequel le premier filet de vis sans fin (13) dépasse du corps d'arbre (12) dans la direction radiale d'un premier surplomb (18) et le premier surplomb (18) définit une première surface annulaire avec une première extrémité d'enveloppe externe (34), dans lequel une largeur d'anneau de la première surface annulaire correspond au premier surplomb (18),
- dans lequel le dispositif de convoyage (6) définit, dans la direction axiale du corps d'arbre (12), une première portion de convoyage (9),
- dans lequel le corps d'arbre (12) est logé dans le boîtier (7) et est logé de manière rotative, au niveau de sa première extrémité d'arbre (14), au moyen d'un premier dispositif de palier (16) et, au niveau de sa deuxième extrémité d'arbre (15), distante de celle-ci dans la direction axiale, au moyen d'un deuxième dispositif de palier (17) sur le boîtier (7) et
- dans lequel le boîtier (7) comprend, au niveau du dispositif de broyage (5), au moins une ouverture d'alimentation (19) ouverte en direction du dispositif d'alimentation (4) et
- la matière plastique à traiter est broyée par le dispositif de broyage (5) et est convoyée, au moyen de l'au moins un premier filet de vis sans fin (13) du dispositif de convoyage (6), le long de la première portion de convoyage (9) en direction de la deuxième extrémité d'arbre (15),
- mise à disposition d'un dispositif d'extrusion (3) avec
- un boîtier d'extrudeuse (22),
- au moins une vis sans fin d'extrudeuse (21), comprenant un corps de base de vis sans fin (29) et au moins un autre filet de vis sans fin (28),
- dans lequel l'au moins un autre filet de vis sans fin (28) de la vis sans fin d'extrudeuse (21) définit une autre extrémité d'enveloppe externe (35),
- dans lequel la vis sans fin d'extrudeuse (21) est logée dans le boîtier d'extrudeuse (22) et définit un autre axe longitudinal (23) et
- dans lequel l'au moins une vis sans fin d'extrudeuse (21) définit une autre portion de convoyage (24) et le dispositif d'extrusion (3) est disposée, vue dans la direction de convoyage, en aval de l'unité de traitement (2),
- mise à disposition d'une zone de transfert (8) avec une ouverture de sortie (20) hors du boîtier (7) et une ouverture de remplissage (25) dans le boîtier d'extrudeuse (22), dans lequel la zone de transfert (8) est disposée dans une portion d'extrémité de la première portion de convoyage (9) du dispositif de convoyage (6) et la première portion de convoyage (9) est en liaison d'écoulement, dans la zone de transfert (8), avec la deuxième portion de convoyage (24),
- dans lequel, par rapport à une projection sur un plan horizontal, un premier axe longitudinal (10) et un autre axe longitudinal (23) se croisent entre eux dans la zone de transfert (8) et
- dans lequel la matière plastique convoyée par le dispositif de convoyage (6) est transférée dans la zone de transfert (8), au dispositif d'extrusion (3) et à son au moins une vis sans fin d'extrudeuse (21),
dans lequel
- la matière plastique extrudée est chauffée, pendant son mouvement de convoyage le long de la première portion de convoyage (9) en direction de la zone de transfert (8), au moins au moyen du dispositif de convoyage (6), à une température de transfert avec une valeur de température moyenne, dans lequel la valeur de température moyenne de la température de transfert se trouve au moins dans la plage de la température de ramollissement de la matière plastique,
- l'au moins un autre filet de vis sans fin (28) de la vis sans fin d'extrudeuse (21), vue dans une direction de projection axiale en direction du premier axe longitudinal (10) du corps d'arbre (12), est disposé de façon à ce que l'au moins un autre filet de vis sans fin (28) dépasse, en direction du premier axe longitudinal (10), dans la première surface annulaire définie par le premier filetd e vis sans fin (13) avec son premier surplomb (18) et
- la matière plastique broyée est convoyée, dans la zone de transfert (8), avec sa température de transfert, au moyen de l'au moins un premier filet de vis sans fin (13), directement à l'intérieur de l'autre extrémité d'enveloppe (35) définie par au moins un autre filet de vis sans fin (28) de la vis sans fin d'extrudeuse (21).

2. Procédé selon la revendication 1, **caractérisé en ce que** la valeur de température de la température de transfert de la matière plastique correspond au moins à la température de fusion de la matière plastique.

3. Procédé selon la revendication 1 ou 2, **caractérisé en ce que** la valeur de température de la température de transfert de la matière plastique est d'au moins 100 °C.

4. Procédé selon l'une des revendications précédentes, **caractérisé en ce que** jusqu'à 20 % de la quantité de chaleur nécessaire pour le chauffage de la matière plastique de la température d'alimentation à une température de sortie de la matière plastique hors du dispositif d'extrusion (3) sont apportés à la matière plastique au moyen du dispositif de convoyage (6).

5. Procédé selon l'une des revendications précédentes, **caractérisé en ce que** le chauffage de la matière plastique est effectué au moyen du mouvement de rotation du dispositif de convoyage (6) et son au moins un premier filet de vis sans fin (13) sur une base mécanique.

6. Procédé selon l'une des revendications précédentes, **caractérisé en ce que** une quantité de chaleur supplémentaire est apportée et/ou une quantité de chaleur est retirée de la matière plastique pendant son mouvement de convoyage au moins le long de la première portion de convoyage (9).

7. Installation de traitement (1) pour une matière plastique, plus particulièrement pour l'exécution du procédé selon l'une des revendications précédentes pour le traitement d'une matière plastique thermoplastique pour son recyclage, comprenant
- un dispositif d'alimentation (4),
- une unité de traitement (2) avec
- un boîtier (7) de forme cylindrique creuse,
- un corps d'arbre (12) avec un dispositif de broyage (5) disposé ou formé sur le corps d'arbre (12) et un dispositif de convoyage (6) se raccordant, dans la direction de convoyage, au dispositif de broyage (5), comprenant au moins un premier filet de vis sans fin (13),
- dans lequel le corps d'arbre (12) définit un premier axe longitudinal (10),
- dans lequel le premier filet de vis sans fin (13) dépasse du corps d'arbre (12) dans la direction radiale d'un premier surplomb (18) et le premier surplomb (18) définit une première surface annulaire avec une première extrémité d'enveloppe externe (34), dans lequel une largeur d'anneau de la première surface annulaire correspond au premier surplomb (18),
- dans lequel le dispositif de convoyage (6) définit, dans la direction axiale du corps d'arbre (12), une première portion de convoyage (9),
- dans lequel le corps d'arbre (12) est logé dans le boîtier (7) et est logé de manière rotative, au niveau de sa première extrémité d'arbre (14), au moyen d'un premier dispositif de palier (16) et, au niveau de sa deuxième extrémité d'arbre (15), distante de celle-ci dans la direction axiale, au moyen d'un deuxième dispositif de palier (17) sur le boîtier (7) et
- dans lequel le boîtier (7) comprend, au niveau du dispositif de broyage (5), au moins une ouverture d'alimentation (19) ouverte en direction du dispositif d'alimentation (4),
- un dispositif d'extrusion (3) avec
- un boîtier d'extrudeuse (22),
- au moins une vis sans fin d'extrudeuse (21), comprenant un corps de base de vis sans fin (29) et au moins un autre filet de vis sans fin (28),
- dans lequel l'au moins un autre filet de vis sans fin (28) de la vis sans fin d'extrudeuse (21) définit une autre extrémité d'enveloppe externe (35),
- dans lequel la vis sans fin d'extrudeuse (21) est logée dans le boîtier d'extrudeuse (22) et définit un autre axe longitudinal (23) et
- dans lequel l'au moins une vis sans fin d'extrudeuse (21) définit une autre portion de convoyage (24) et le dispositif d'extrusion (3) est disposée, vue dans la direction de convoyage, en aval de l'unité de traitement (2),
- une zone de transfert (8) avec une ouverture de sortie (20) hors du boîtier (7) et une ouverture de remplissage (25) dans le boîtier d'extrudeuse (22), dans lequel la zone de transfert (8) est disposée dans une portion d'extrémité de la première portion de convoyage (9) du dispositif de convoyage (6) et la première portion de convoyage (9) est en liaison d'écoulement, dans la zone de transfert (8), avec la deuxième portion de convoyage (24) et
- dans lequel, par rapport à une projection sur un plan horizontal, un premier axe longitudinal (10) et un autre axe longitudinal (23) se croisent entre eux dans la zone de transfert (8),
**caractérisée en ce que**
- au moins l'autre filet de vis sans fin (28) de la vis sans fin d'extrudeuse (21), vu dans une direction de projection axiale en direction du premier axe longitudinal (10) du corps d'arbre (12) dépasse, en direction du premier axe longitudinal (10), dans la première surface annulaire définie par le premier filet de vis sans fin (13) avec son premier surplomb (18).

8. Installation de traitement (1) selon la revendication 7, **caractérisée en ce qu'**une partie du corps de base de vis sans fin (29) de la vis sans fin d'extrudeuse (21) dépasse dans la première surface annulaire définie par le premier surplomb (18) du premier filet de vis sans fin (13).

9. Installation de traitement (1) selon la revendication 7 ou 8, **caractérisée en ce qu'**un tube de support (26) est prévu, le premier filet de vis sans fin (13) étant disposé ou formé sur ce tube de support (26) et le tube de support (26) est disposé sur le corps d'arbre (12) et relié de manière solidaire en rotation avec le corps d'arbre (12) afin d'obtenir un sous-ensemble cohérent.

10. Installation de traitement (1) selon l'une des revendications 7 à 9, **caractérisée en ce que** l'autre extrémité d'enveloppe externe (35) de l'autre filet de vis sans fin (28) de la vis sans fin d'extrudeuse (21) est disposée de manière immédiatement adjacente au corps d'arbre (12) de l'unité de traitement (2).

11. Installation de traitement (1) selon l'une des revendications 7 à 10, **caractérisée en ce que** le premier filet de vis sans fin (13), vu dans la direction du premier axe longitudinal (10), se termine avant l'autre extrémité d'enveloppe externe (35) définie par l'autre filet de vis sans fin (28).

12. Installation de traitement (1) selon l'une des revendications 7 à 11, **caractérisée en ce qu'**un élément de guidage (31) est prévu, cet élément de guidage (31) étant disposé sur le corps d'arbre (12), dans la direction axiale, sur le côté du dispositif de convoyage (6) opposé au dispositif de broyage (5) et sa section transversale, vue en coupe axiale, est légèrement plus petite, dans sa portion orientée vers la vis sans fin d'extrudeuse (21), qui l'autre extrémité d'enveloppe externe (35) définie par l'autre filet de vis sans fin (28).

13. Installation de traitement (1) selon l'une des revendications 7 à 12, **caractérisée en ce qu'**un renfoncement (33) est prévu dans le corps d'arbre (12), ce renfoncement (33) étant réalisé de manière continue sur la circonférence du corps d'arbre (12) et sa section transversale, vue en coupe transversale, dans la portion orientée vers la vis sans fin d'extrudeuse (21), est légèrement plus grande que l'autre extrémité d'enveloppe externe (35) définie par l'autre filet de vis sans fin (28).

14. Installation de traitement (1) selon l'une des revendications 7 à 13, **caractérisée en ce qu'**un dispositif de régulation de température (36) est prévu, ce dispositif de régulation de température (36) étant disposé ou formé sur et/ou dans le boîtier (7) et/ou dans le corps d'arbre (12), dans lequel le dispositif de régulation de température (36) permet d'apporter et/ou de retirer de la matière plastique une quantité de chaleur au moins le long de la première portion de convoyage (9).
